(19) Europäisches Patentamt
European Patent Office
Office européen des brevets

(11) Veröffentlichungsnummer: **0 338 985 B1**

# (12) EUROPÄISCHE PATENTSCHRIFT

(45) Veröffentlichungstag der Patentschrift: **18.05.94**

(51) Int. Cl.[5]: **C08L 9/02**, C08L 75/00, C08L 63/00, C09J 109/02, C09J 175/04, //(C08L9/02,75:00, 63:00),(C08L75/00,9:02,63:00), (C08L63/00,75:00,9:02)

(21) Anmeldenummer: **89810277.7**

(22) Anmeldetag: **11.04.89**

## (54) Modifizierte Epoxidharze.

(30) Priorität: **18.04.88 CH 1415/88**

(43) Veröffentlichungstag der Anmeldung:
**25.10.89 Patentblatt 89/43**

(45) Bekanntmachung des Hinweises auf die Patenterteilung:
**18.05.94 Patentblatt 94/20**

(84) Benannte Vertragsstaaten:
**BE CH DE FR GB IT LI NL SE**

(56) Entgegenhaltungen:
**EP-A- 0 066 167**
**DE-A- 2 152 606**
**FR-A- 2 053 561**
**GB-A- 2 071 129**

(73) Patentinhaber: **CIBA-GEIGY AG**
**Klybeckstrasse 141**
**CH-4002 Basel(CH)**

(72) Erfinder: **Mülhaupt, Rolf Dr.**
**Chemin de la Prairie 2**
**CH-1723 Marly(CH)**
Erfinder: **Rüfenacht, Werner**
**rte des Pralettes 23**
**CH-1723 Marly(CH)**
Erfinder: **Powell, Jeremy Hugh**
**Wapentake**
**Linton Road**
**Horseheath Cambridge CB1 6OF(GB)**
Erfinder: **Parrinello, Giovani, Dr.**
**Av. Général-Guisan 44**
**CH-1700 Fribourg(CH)**

EP 0 338 985 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Kombinationen von ausgewählten Dien-Copolymeren und verkappten Urethanpräpolymeren, Gemische enthaltend diese Kombinationen und Epoxidharze, die gehärteten Produkte aus diesen Gemischen und die Verwendung dieser Gemische als Klebstoffe oder Dichtungsmassen, insbesondere als Strukturkleber.

Aus der DE-A-2,152,606 sind Gemische aus Epoxidharzen und phenol-verkappten Polyurethanen bekannt. Die Polyurethane werden durch Umsetzung von präpolymeren Diisocyanaten mit gegebenenfalls substituierten Monophenolen erhalten. Die Gemische lassen sich zusammen mit Polyaminhärtern zur Herstellung von Beschichtungen einsetzen, die sich durch besondere Elastizität auszeichnen.

Aus der EP-A-66,167 ist ein Verfahren zur Herstellung von mercaptogruppenterminierten Oligourethanen bekannt. Diese Oligomeren lassen sich als Bindemittel für oxidativ härtbare Beschichtungs- und Dichtungsmassen oder als elastifizierend wirkende Zusatzmittel für Epoxidharze einsetzen. Sie sind auch zur Modifizierung von Polybutadienen geeignet.

Aus der EP-A-231,760 sind ausgewählte Oligourethane enthaltend Mercaptoendgruppen bekannt. Die Verbindungen leiten sich von ausgewählten Polyalkylenethern ab und lassen sich als Dichtungsmassen oder als Zusätze zu vernetzbaren Epoxidharzsystemen einsetzen.

In der FR-A-2,053,561 werde ebenfalls mercapto-terminierte Polyurethane beschrieben, die mit Epoxidharzen oder Polybutadienen copolymerisiert werden können. Diese Polyurethane sind feuchfigkeitsbeständig und können in Gegenwart von Oxidationsmitteln gehärtet werden.

Schliesslich sind aus der EP-A-30,426 flüssige Zusammensetzungen bekannt, die zwei miteinander verträgliche, jeweils für sich härtbare Oligomere unterschiedlicher Reaktivität enthalten. Dabei kann es sich unter anderem auch um Gemische aus einem Butadien/Acrylnitril-Copolymeren enthaltend reaktive Endgruppen mit einem isocyanat-terminierten Präpolymeren handeln. Zusätzlich können diese Gemische noch eine Komponente enthalten, beispielsweise ein Epoxidharz, die mit wenigstens einem der flüssigen Oligomeren reagiert und bei der Härtung deblockiert wird.

Ferner ist bekannt, dass Epoxidharze durch Zusatz von Copolymeren auf Basis von Butadien/Acrylnitril oder durch Zusatz von Addukten solcher Copolymerer an Epoxidharze modifiziert werden können.

Die vorbekannten modifizierten Epoxidharze weisen nach der Härtung im allgemeinen eine hohe Schlagzähigkeit und Flexibilität auf. Die Schälfestigkeit lässt aber in der Regel zu wünschen übrig. Ausserdem sind die Zugscherfestigkeit und die Glasübergangstemperatur der gehärteten Mischungen im Vergleich zu gehärteten, nicht modifizierten Epoxidharzen herabgesetzt.

Es wurden jetzt Kombinationen von Schlagzähigkeits-Modifikatoren gefunden, die im Gemisch mit Epoxidharzen eine signifikante Erhöhung der Schälfestigkeit bewirken, eine verringerte Tendenz zur Rissfortpflanzung aufweisen und hohe Schälfestigkeiten ohne Verlust der Zugscherfestigkeit ermöglichen.

Ferner lassen sich mit diesen Modifikatoren, je nach Harzformulierung, elastische Produkte mit hoher Schälfestigkeit und tiefer Glasübergangstemperatur oder hochfeste Produkte mit hoher Glasübergangstemperatur und hoher Schälfestigkeit herstellen; die hochfesten Produkte zeichnen sich durch hohe Risszähigkeiten aus und die Rissfortpflanzung ist auch bei hoher und schockartiger Schlagbeanspruchung deutlich herabgesetzt.

Die vorliegende Erfindung betrifft Zusammensetzungen enthaltend

A) ein flüssiges Copolymeres auf Basis von Butadien, einem polaren, ethylenisch ungesättigten Comonomeren und gegebenenfalls einem weiteren ethylenisch ungesättigten Comonomeren, wobei besagtes Copolymeres gegebenenfalls gegenüber Epoxidharzen reaktive Endgruppen enthält oder über besagte Endgruppen an ein Epoxidharz addiert ist, und

B) eine Verbindung der Formel I

$$R^1 - \left[ X - \overset{\displaystyle O}{\overset{\|}{C}} - Y - R^3 \right]_m \qquad (I),$$

worin m 2 bis 6 ist, $R^1$ der m-wertige Rest eines in Epoxidharzen löslichen oder dispergierbaren, elastomeren Präpolymeren nach dem Entfernen der endständigen Isocyanat-, Amino- oder Hydroxylgruppen ist, X -O- oder $-NR^2-$ ist, wobei $R^2$ Wasserstoff, $C_1$-$C_6$Alkyl oder Phenyl bedeutet, Y -O-ist, $R^3$ der Rest eines Monophenols nach dem Entfernen einer Hydroxylgruppe ist oder Y und $R^3$ zusammen den Rest eines aliphatischen Lactams bilden, der über das N-Atom mit der Carbonylgruppe verknüpft ist,

mit der Massgabe, dass mindestens eine der Gruppen -X- oder -Y-$R^3$ ein Stickstoffatom enthält.

Komponente A) ist ein ausgewähltes flüssiges, elastomeres Copolymeres auf Butadienbasis und enthält vorzugsweise gegenüber Epoxidharzen reaktive Endgruppen.

Diese Komponente kann als solche eingesetzt werden oder als Addukt an ein Epoxidharz, vorzugsweise an einen Diglycidylether auf Bisphenolbasis.

Unter einem "flüssigen Copolymeren" ist im Rahmen dieser Beschreibung eine Verbindung zu verstehen, die bei Temperaturen unterhalb von 80 °C fliessfähig ist und sich ohne weiteres mit einem Epoxidharz mischen lässt.

Beispiele für polare, ethylenisch ungesättigte Comonomere zur Herstellung von Komponente A) sind Acrylsäure, Methacrylsäure, Ester der Acryl- oder Methacrylsäure, beispielsweise die Methyl- oder Ethylester, Amide der Acryl- oder Methacrylsäure, Fumarsäure, Itaconsäure, Maleinsäure oder deren Ester oder Halbester, beispielsweise die Mono- oder Dimethylester, oder Maleinsäure- oder Itaconsäureanhydrid; Vinylester, beispielsweise Vinylacetat, polare Styrole, wie kernchlorierte oder kernbromierte Styrole, oder insbesondere Acrylnitril oder Methacrylnitril.

Neben polaren ethylenisch ungesättigten Comonomeren kann Komponente A) noch weitere unpolare, ethylenisch ungesättigte Comonomere enthalten. Beispiele dafür sind Ethylen, Propylen oder insbesondere Styrol oder substituierte Styrole, wie Vinyltoluol.

Bei Komponente A) kann es sich um statistische Copolymere, Block-Copolymere oder um Pfropf-Copolymere handeln.

Der Anteil der Comonomeren in Komponente A) kann in weiten Bereichen schwanken. Diese Komponente wird so gewählt, dass sich in Kombination mit Komponente B) und gegebenenfalls einem Epoxidharz C) eine Elastomerphase ausbildet. Dabei kann es sich um homogene oder heterogene Systeme handeln.

Eine Elastomerphase kann bereits in Komponente A) vorhanden sein, beispielsweise bei Verwendung eines Polybutadien-Pfropf-Copolymeren; die Elastomerphase kann aber auch erst durch Auswahl geeigneter Komponenten A), B) und gegebenenfalls C) entstehen.

Wünscht man heterogene Systeme, so werden die Komponenten in der Regel so gewählt, dass die Differenz der Löslichkeitsparameter von A) und/oder B) zu C) zwischen 0,2 und 1,0, bevorzugt zwischen 0,2 und 0,6, liegt. Diese Auswahlkriterien sind beispielsweise in C.B. Bucknall in "Toughened Plastics", Kapitel 2, Applied Science Publishers Ltd., London 1977 beschrieben.

Bevorzugte Komponenten A) sind flüssige Copolymere auf Basis von Butadien-Acrylnitril, Butadien-Acrylnitril-Styrol Pfropfcopolymere (ABS), und Butadien-Methylmethacrylat-Styrol Propfcopolymere (MBS).

Besonders bevorzugte Komponenten A) sind flüssige Copolymere, die erhältlich sind durch Pfropfcopolymerisation von polaren, ethylenisch ungesättigten Comonomeren auf Polybutadienmikrogele.

Ganz besonders bevorzugte Komponenten A) sind flüssige Butadien-Acrylnitril-Copolymere.

Die Molekulargewichte dieser bevorzugten Komponenten A) betragen vorzugsweise 500-5000, insbesondere 1000-3000.

Weitere ganz besonders bevorzugte Komponenten A) sind Butadien-Acrylnitril-Copolymere mit gegenüber Epoxidharzen reaktiven funktionellen Gruppen.

Beispiele für solche Copolymeren sind carboxyl- oder hydroxyl- oder aminhaltige Acrylnitril-Butadien-Kautschuke, beispielsweise Verbindungen vom Typ Hycar® der Fa. Goodrich.

Bevorzugte Typen solcher Kautschuke enthalten die Strukturelemente der folgenden Formeln IIa bis IId und die Endgruppen Q

$-CH_2-CH=CH-CH_2-$ (IIa),

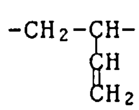 (IIb), 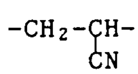 (IIc), 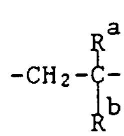 (IId),

worin $R^a$ Wasserstoff oder Methyl ist, $R^b$ -COOH, $COOR^c$ oder $-CONH_2$ bedeutet, $R^c$ ein aliphatischer Rest, vorzugsweise Methyl, ist, und Q ausgewählt wird aus der Gruppe bestehend aus -R-COOH, -R-OH und

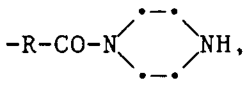

worin R ein Alkylenrest ist; der Anteil der Reste IIa und IIb beträgt vorzugsweise 5-50 Gew.%, der Anteil des Rests Ic beträgt vorzugsweise 5-50 Gew.%, der Anteil des Rests IId beträgt vorzugsweise 0-30 Gew.%, bei Resten mit freien Carboxylgruppen bevorzugt 0-10 Gew.%, wobei die Mengenangaben auf die Gesamtmenge der Reste IIa, IIb, IIc und gegebenenfalls IId bezogen sind.

Komponente A) wird vorzugsweise als Addukt eines Butadien-Acrylnitril-Copolymerenmit gegenüber Epoxidharzen reaktiven funktionellen Gruppen an ein Epoxidharz eingesetzt.

Die Herstellung solcher Addukte erfolgt in an sich bekannter Weise durch Erhitzen des reaktiven Acrylnitril-Butadien-Kautschuks und des Epoxidharzes mit gegebenenfalls einem Katalysator, so dass ein schmelzbares aber noch härtbares Vorkondensat entsteht.

Als Katalysator verwendet man beispielsweise Triphenylphosphin, tertiäre Amine, quaternäre Ammonium- oder Phosphoniumsalze oder Chrom-Acetylacetonat.

Komponente B) ist ein ausgewähltes Polyurethan oder ein ausgewählter Polyharnstoff. Diese Verbindungen leiten sich von speziellen Präpolymeren ab und besitzen spezielle über Urethan- oder Harnstoffgruppen gebundene Endgruppen.

Unter einem "elastomeren Präpolymerrest $R^1$" versteht man im Rahmen dieser Beschreibung einen mit m-Isocyanat-, Amino- oder Hydroxylgruppen terminierten Rest eines Präpolymeren, der nach der Verkappung dieser Gruppen zu einer Verbindung der Formel I führt, welche in Kombination mit der Dienkomponente A) und Epoxidharzen C) nach der Härtung eine Elastomerphase oder eine Mischung von Elastomerphasen ergibt. Dabei kann es sich um homogene oder bevorzugt um heterogene Kombinationen von Komponenten A), B) und C) handeln. Die Elastomerphase(n) ist (sind) in der Regel durch eine Glasübergangstemperatur von weniger als 0 ° C gekennzeichnet.

Unter einem "in Epoxidharzen löslichen oder dispergierbaren Präpolymeren" versteht man im Rahmen dieser Beschreibung einen mit m-Isocyanat-, Amino- oder Hydroxylgruppen terminierten Rest eines Präpolymeren, der nach der Verkappung dieser Gruppen zu einer Verbindung der Formel I führt, die in einem Epoxidharz C) oder in einer Kombination eines Epoxidharzes C) und eines Butadien-Copolymeren A) löslich oder ohne weitere Hilfsmittel, wie z.B. Emulgatoren, dispergierbar ist; wobei sich also eine homogene Phase ausbildet oder wobei zumindest keine makroskopische Phasenseparation von einer der Komponenten A), B) oder C) oder von einem Gemisch besagter Komponenten stattfindet.

Im Falle von heterogenen Systemen sollte in der Regel die oben beschriebene Differenz der Löslichkeitsparameter von A) und/oder B) und/oder C) eingehalten werden.

Die Löslichkeit oder Dispergierbarkeit von B) in der Kombination von A) und C) wird in erster Linie durch die Auswahl geeigneter Präpolymerreste $R^1$ bewerkstelligt. Beispiele für geeignete Reste sind weiter unten bei der Herstellung der Komponente B) gegeben.

Vorzugsweise handelt es sich bei Komponente B) um eine wasserunlösliche Verbindung der Formel I. Darunter versteht man im Rahmen dieser Beschreibung eine Verbindung, die sich zu weniger als 5 Gew.%, vorzugsweise weniger als 1 Gew.% in Wasser löst, und die bei der Wasserlagerung nur eine geringe Menge Wasser aufnimmt, vorzugsweise weniger als 5 Gew.%, oder dabei lediglich eine geringe Quellung zeigt.

Die $R^1$ zugrundliegenden Präpolymeren besitzen in der Regel Molekulargewichte (Zahlenmittel) von 150 bis 10000, vorzugsweise von 500 bis 3000.

Die mittlere Funktionalität dieser Präpolymeren beträgt wenigstens zwei, bevorzugte 2 bis 3, und besonders bevorzugt 2 bis 2,5.

Der Begriff "elastomeres Polyurethan" oder "elastomerer Polyharnstoff" ist dem Fachmann an sich bekannt (vergl. C. Hepburn: "Polyurethane Elastomers", Applied Science Publishers, London 1982).

Elastomere Polyurethane oder Polyharnstoffe enthalten im allgemeinen starre und flexible Anteile (Hart- und Weichsegmente).

Bei Komponente B) kann es sich um flüssige oder um thermoplastische Verbindungen der Formel I handeln. Bevorzugt werden Verbindungen mit einer Erweichungstemperatur von weniger als 80 ° C, bevorzugt weniger als 40 ° C.

Geeignete Komponenten B) können im wesentlichen linear sein oder es handelt sich um verzweigte Typen. Der Verzweigungsgrad wird dabei so gewählt, dass die Löslichkeit oder Dispergierbarkeit der betreffenden Komponente in den Komponenten A) und C) gegeben ist. Dies wird in der Regel dann der Fall sein, wenn Komponente B) in einem polaren organischen Lösungsmittel oder in einem Epoxidharz löslich

oder dispergierbar ist.

Die Verbindungen der Formel I lassen sich, je nach der Natur des zugrundeliegenden Präpolymeren oder der Bedeutung der Gruppen X und Y, auf unterschiedlichen Wegen erhalten.

Verbindungen der Formel I, worin X $-NR^2-$ ist und Y -O- bedeutet oder zusammen mit $R^3$ den Rest eines aliphatischen Lactams bildet, lassen sich beispielsweise durch Umsetzung präpolymerer Isocyanate der Formel IIIa mit H-aciden Verbindungen der Formel IVa herstellen (Verfahren a)

$R^1\!-\!(NCO)_m$ (IIIa), $H\text{-}Y\text{-}R^3$ (IVa);

Polyharnstoffe der Formel I lassen sich ferner durch Umsetzung von präpolymeren Aminen der Formel IIIb mit Urethanen der Formel IVb herstellen (Verfahren b)

$R^1\!-\!(NR^2H)_m$ (IIIb),

$$R^6-O-\overset{\displaystyle O}{\overset{\|}{C}}-NR^4-R^5 \qquad (IVb);$$

Verbindungen der Formel I, worin X -O- ist und Y und $R^3$ zusammen den Rest eines aliphatischen Lactams darstellen, lassen sich durch Umsetzung von präpolymeren Alkoholen der Formel IIIc mit Urethanen der Formel IVb herstellen (Verfahren c)

$R^1\!-\!(OH)_m$ (IIIc),

$$R^6-O-\overset{\displaystyle O}{\overset{\|}{C}}-NR^4-R^5 \qquad (IVb);$$

Verbindungen der Formel I, worin X -O- ist und Y und $R^3$ zusammen den Rest eines aliphatischen Lactams darstellen, lassen sich ferner durch Umsetzung von Chlorcarbonyloxyderivaten der Formel IIId mit H-aciden Verbindungen der Formel IVd herstellen (Verfahren d)

$$R^1-(O-\overset{\displaystyle O}{\overset{\|}{C}}-Cl)_m \qquad (IIId),$$

$H\text{-}NR^4\text{-}R^5$ (IVd),

in diesen Formeln IIIa bis IIId und IVa bis IVd besitzen $R^1$, $R^2$, $R^3$, X, Y und m die weiter oben definierte Bedeutung, $R^4$ und $R^5$ bilden zusammen mit dem gemeinsamen N-Atom den Rest eines aliphatischen Lactams und $R^6$ ist ein als Abgangsgruppe fungierender Rest, beispielsweise Alkyl oder Aryl, insbesondere $C_1$-$C_6$ Alkyl oder Phenyl.

Der Rest $R^3$ leitet sich von einer ausgewählten OH- oder NH-aciden Komponente ab. In der Regel ist $R^3$ unsubstituiert oder der Rest trägt inerte Substituenten; Beispiele dafür sind Alkyl, Alkenyl, Alkinyl, Alkoxycarbonyl, Alkoxy oder Halogen.

Leitet sich $R^3$ von einem Monophenol ab, so handelt es sich dabei vorzugsweise um ein- oder mehrkernige carbocyclisch-aromatische Reste. Mehrkernige Reste können kondensiert sein. Zweikernige Reste sind bevorzugt über ein Brückenglied miteinander verbunden. Beispiele für Brückenglieder sind weiter unten aufgezählt.

Beispiele für Phenole mit kondensierten Resten sind Hydroxynaphthaline oder -anthracene.

Leitet sich $R^3$ von einem Monophenol ab, so besitzt die Gruppierung $-Y-R^3$ vorzugsweise die Struktur der Formel V oder VI

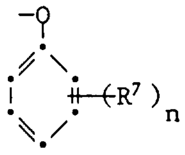 (V),

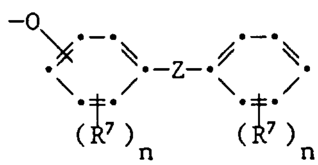 (VI),

worin $R^7$ $C_1$-$C_{20}$Alkyl, $C_1$-$C_{20}$Alkoxy, $C_2$-$C_{20}$Alkenyl, $C_2$-$C_6$-Alkinyl, -CO-O$R^8$ oder Halogen darstellt, n 0, 1 oder 2 bedeutet, Z eine direkte C-C-Bindung ist oder ein Brückenglied ausgewählt aus der Gruppe bestehend aus -$CR^9R^{10}$-, -O-, -S-, -$SO_2$-, -CO-, -COO-, -$CONR^{11}$- und -$SiR^{12}R^{13}$- ist, $R^9$ , $R^{10}$ und $R^{11}$ unabhängig voneinander Wasserstoff, -$CF_3$ oder $C_1$-$C_6$Alkyl sind oder $R^9$ und $R^{10}$ zusammen mit dem gemeinsamen C-Atom einen cycloaliphatischen Rest mit 5-12 C-Atomen bilden, $R^8$ $C_1$-$C_{20}$Alkyl ist und $R^{12}$ und $R^{13}$ $C_1$-$C_6$Alkyl bedeuten.

Besonders bevorzugt sind die Phenolreste der Formeln V oder VI, worin n 0 oder 1 ist und $R^7$ $C_1$-$C_6$Alkyl, Allyl, Prop-1-enyl oder $C_1$-$C_6$Alkoxy bedeutet.

Von den Phenolresten der Formel VI sind diejenigen besonders bevorzugt, worin die freie Valenz sich in 4-Stellung zur Brücke Z befindet.

Weiter bevorzugt sind Reste der Formel VI, worin Z ausgewählt wird aus der Gruppe bestehend aus -$CH_2$-, -$C(CF_3)_2$-, -O-, -$SO_2$-, einer direkten C-C-Bindung und besonders -$C(CH_3)_2$-, und worin n 0 ist.

Bevorzugte Monophenole sind Phenol, o-, m- oder p-Kresol, 4-Hydroxybiphenyl, 4-Hydroxyphenoxybenzol, 4-Hydroxyphenylsulfonyl-benzol, 4-Hydroxyphenylmethyl-benzol oder 4-Hydroxybenzoesäurealkylester, beispielsweise der Methyl- oder Nonylester.

Bedeutet $R^7$ $C_1$-$C_{20}$Alkyl bzw. $C_1$-$C_{20}$Alkoxy oder $R^8$ $C_1$-$C_{20}$Alkyl, so handelt es sich dabei um einen geradkettigen oder verzweigten Rest.

Beispiele dafür sind Methyl, Ethyl, n-Propyl, Isopropyl, n-Butyl, Isobutyl, tert.Butyl, n-Pentyl, n-Hexyl, 2-Ethylbutyl, n-Heptyl, n-Octyl, 2-Ethylhexyl, n-Nonyl, n-Decyl, n-Undecyl, n-Dodecyl, n-Tetradecyl, n-Pentadecyl, n-Hexadecyl, n-Octadecyl oder n-Eicosyl bzw. die entsprechenden Alkoxyderivate.

Vorzugsweise ist $R^7$ $C_1$-$C_6$Alkyl oder $C_1$-$C_6$Alkoxy, besonders bevorzugt geradkettiges $C_1$-$C_6$Alkyl oder $C_1$-$C_6$Alkoxy und ganz besonders bevorzugt Methyl oder Methoxy.

Bedeuten irgendwelche Reste $C_1$-$C_6$Alkyl, so handelt es sich dabei vorzugsweise um geradkettige Reste, also um Methyl, Ethyl, n-Propyl, n-Butyl, n-Pentyl oder n-Hexyl, ganz besonders jedoch Methyl.

$R^7$ bedeutet als $C_2$-$C_{20}$Alkenyl beispielswiese Vinyl, Allyl, 1-Propenyl, 1-Butenyl, 1-Pentenyl, 1-Hexenyl, Pentadec-8-enyl, Pentadec-8,11-dienyl oder Pentadec-8,11,14-trienyl. Bevorzugt werden Vinyl, 1-Propenyl und Allyl, ganz besonders Allyl.

$R^7$ bedeutet als $C_2$-$C_6$Alkinyl beispielsweise Ethinyl, Propargyl, 1-Butinyl, 1-Pentinyl oder 1-Hexinyl. Bevorzugt wird Propargyl.

Ist $R^7$ Halogen, so kann es sich dabei um Fluor, Chlor, Brom oder Iod handeln. Bevorzugt werden Chlor oder Brom, insbesondere Brom.

Bilden $R^9$ und $R^{10}$ zusammen mit dem gemeinsamen C-Atom einen cycloaliphatischen Rest, so handelt es sich dabei beispielsweise um einen Cyclopentyliden-, Cyclohexyliden-, Cycloheptyliden-, Cyclooctyliden- oder Cyclododecylidenrest. Bevorzugt werden Cyclohexyliden und Cyclododecyliden.

Bilden Y und $R^3$ zusammen den Rest eines aliphatischen Lactams, so handelt es sich bei der Gruppierung -Y-$R^3$ in der Regel um ein Lactam aus einer aliphatischen $\gamma$-, $\delta$- oder $\epsilon$-Aminocarbonsäure; insbesondere um einen Rest der Formel VII

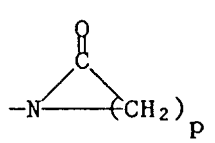 (VII),

worin p 3 bis 5 bedeutet.

Bevorzugt sind Reste der Formel VII, worin p 5 ist.

Bei dem Isocyanat der Formel IIIa handelt es sich entweder um ein Präpolymeres a1), das sich ableitet von einer Addition eines Polyisocyanats, bevorzugt eines Di- oder Triisocyanats, ganz besonders bevorzugt eines Diisocyanats, an eine präpolymere Polyhydroxyl- oder Polysulfhydrylkomponente oder an ein Gemisch solcher präpolymeren Komponenten gegebenenfalls in Kombination mit Kettenverlängerern (kurzkettigen Polyhydroxyl-, Polysulfhydryl- oder Polyaminverbindungen), oder um ein präpolymeres Polyisocyanat a2), das sich ableitet von einem präpolymeren Polyamin der Formel IIIb, insbesondere von einem präpolymeren Polyetheramin.

Präpolymere Komponenten zur Herstellung von a1) können Kondensations- oder Additionspolymere sein, die gegebenenfalls aufgepfropfte 1-Olefine enthalten können, wobei besagte 1-Olefine neben unpolaren auch polare Gruppen, wie Nitril-, Ester- oder Amidgruppen aufweisen können. Beispiele für solche Präpolymere sind Polyester, Polyether, Polythioether, Polyacetale, Polyamide, Polyesteramide, Polyurethane, Polyharnstoffe, Alkydharze, Polycarbonate oder Polysiloxane, sofern diese Verbindungen hydroxyl- oder sulfhydryl-terminiert sind, zu in Epoxidharzen löslichen oder dispergierbaren Verbindungen der Formel I führen und diesen Elastomereigenschaften gemäss der obigen Definition verleihen.

Bevorzugt sind Polyether oder segmentierte Präpolymere enthaltend Polyethersegmente, wie Polyether-amide, Polyether-urethane oder Polyether-harnstoffe.

Diese Verbindungen sind dem Fachmann auf dem Gebiet der Polyurethanchemie als Aufbaukomponenten für Polyurethane bekannt. Sie können linear oder verzweigt sein; bevorzugt werden lineare Typen. Bevorzugte Aufbaukomponenten für Präpolymere a1) sind hydroxyl-terminierte Präpolymere mit mittleren Molekulargewichten (Zahlenmittel) von 150-10000, ganz besonders von 500-3000.

Bei der Herstellung der präpolymeren Polyisocyanate a1) können neben den hydroxyl- oder sulfhydryl-terminierten Präpolymeren auch noch Kettenverlängerer anwesend sein.

Solche Monomeren sind bevorzugt difunktionell oder trifunktionell.

Verwendet man tri- oder höherfunktionell hydroxyl- oder sulfhydrylterminierte Präpolymere oder tri- oder höherfunktionelle Kettenverlängerer zur Herstellung der Komponente a1), so sind die Aufbaukomponenten so zu wählen, dass ein in organischen Lösungsmitteln lösliches oder zumindest quellbares Addukt a1) entsteht.

Der Vernetzungsgrad bei der Verwendung höherfunktioneller Aufbaukomponenten kann in an sich bekannter Weise durch Art und Mengenverhältnisse dieser Komponenten geregelt werden. Durch den Vernetzungsgrad können auch die Elastomereigenschaften in an sich bekannter Weise variiert werden.

So wird bei Einsatz von difunktionellen Präpolymeren und tri- oder höherfunktionellen Kettenverlängerern in der Regel nur ein geringer Anteil der höherfunktionellen Komponente eingesetzt, während bei der Kombination von di- und tri- oder höherfunktionellen Präpolymeren in der Regel eine grössere Menge des höherfunktionellen Kettenverlängerers anwesend sein kann, ohne dass eine übermässige Vernetzung eintritt. Ferner wird der Vernetzungsgrad auch von der Funktionalität des Polyisocyanates abhängen. So wird man bei Anwesenheit von tri- oder höherfunktionellen hydroxyl- oder sulfhydryl-terminierten Aufbaukomponenten in der Regel Diisocyanate einsetzen, während man bei der Verwendung von difunktionellen hydroxyl- oder sulfhydryl-terminierten Aufbaukomponenten auch höherfunktionelle Isocyanate verwendet. Beispiele für präpolymere Aufbaukomponenten zur Herstellung von Polyisocyanaten a1) sind hydroxylterminierte Polyether, insbesondere solche Polyether, die zu wasserunlöslichen Verbindungen der Formel I führen.

Dazu zählen beispielsweise die Polyalkylenetherpolyole, die durch anionische Polymerisation, Copolymerisation oder Blockcopolymerisation von Alkylenoxiden, wie Ethylenoxid, Propylenoxid oder Butylenoxid, mit di- oder polyfunktionellen Alkoholen, wie 1,4-Butandiol, 1,1,1-Trimethylolethan, 1,1,1-Trimethylolpropan, 1,2,6-Hexantriol, Glycerin, Pentaerithrit oder Sorbit, oder mit Aminen, wie Methylamin, Ethylendiamin oder 1,6-Hexylendiamin, als Starterkomponenten oder durch kationische Polymerisation oder Copolymerisation cyclischer Ether, wie Tetrahydrofuran, Ethylenoxid oder Propylenoxid mit sauren Katalysatoren, wie $BF_3 \cdot$ Etherat oder durch Polykondensation von unter Wasserabspaltung polykondensierbaren Glykolen, wie 1,6-Hexandiol, in Gegenwart saurer Veretherungskatalysatoren, wie p-Toluolsulfonsäure, erhalten werden. Ferner kann man auch Oxalkylierungsprodukte von Phosphorsäure oder phosphoriger Säure mit Ethylenoxid, Propylenoxid, Butylenoxid oder Styroloxid verwenden.

Weitere bevorzugte hydroxyl-terminierte Polyether enthalten aufgepfropfte 1-Olefine, wie Acrylnitril, Styrol oder Acrylsäureester. Dabei beträgt der Gewichtsanteil der Pfropfkomponente in der Regel 10-50 %, inbesondere 10-30 %, bezogen auf die Menge des eingesetzten Polyethers.

Weitere Beispiele für präpolymere Aufbaukomponenten zur Herstellung von Polyisocyanaten a1) sind hydroxyl-terminierte Polyesterpolyole, die sich von Di- und/oder Polycarbonsäuren und Di- und/oder Polyolen, bevorzugt von Dicarbonsäuren und Diolen ableiten.

Beispiele für solche Polykondensate sind die hydroxyl-terminierten Polyester, die sich durch Polykondensation von Adipinsäure, Sebazinsäure, Azelainsäure, Dimer- und Trimerfettsäuren, Phthalsäure, Isophthalsäure, Terephthalsäure, Tetrahydrophthalsäure, Hexahydrophthalsäure und Endomethylentetrahydrophthalsäure mit Propylenglykol, 1,4-Butandiol, 1,6-Hexandiol, Di-, Tri- und Tetraethylenglykol, Di-, Tri- und Tetrapropylenglykol, Di-, Tri- und Tetrabutylenglykol, 2,2-Dimethylpropan1,3-diol, 1,1,1-Trimethylolpropan,

1,1,1-Trimethylolethan und 1,2,6-Hexantriol erhalten lassen.

Weitere geeignete präpolymere Aufbaukomponenten zur Herstellung von Polyisocyanaten a1) sind hydroxyl-terminierte Polybutadiene, die insbesondere zusammen mit hydroxyl-terminierten Polyethern zur Bildung der Komponente a1) eingesetzt werden.

Weitere Beispiele für geeignete präpolymere Aufbaukomponenten zur Herstellung von Polyisocyanaten a1) sind Polymerisationsprodukte von Lactonen, beispielsweise von $\epsilon$-Caprolactonen; oder Polyalkylenthioetherpolyole, beispielsweise die Polykondensationsprodukte des Thiodiglykols mit sich und mit Diolen und/oder Polyolen, wie beispielsweise 1,6-Hexandiol, Triethylenglykol, 2,2-Dimethyl-1,3-propandiol oder 1,1,1-Trimethylolpropan.

Bevorzugte präpolymere Aufbaukomponenten zur Herstellung von Polyisocyanaten a1) sind hydroxyl-terminierte Polyether oder Polyester.

Weitere bevorzugte präpolymere Aufbaukomponenten zur Herstellung von Polyisocyanaten a1) sind Gemische von hydroxyl-terminiertem Polybutadien und hydroxyl-terminiertem Polyalkylenglykol oder hydroxy-terminierte Polyalkylenglykole enthaltend aufgepfropfte 1-Olefine, insbesondere Styrol oder Acrylsäurederivate, wie Acrylsäureester oder Acrylnitril.

Ganz besonders bevorzugte präpolymere Aufbaukomponenten zur Herstellung von Polyisocyanaten a1) sind hydroxyl-terminierte Polyether, insbesondere dihydroxyl-terminierte Polyalkylenglykole.

Kettenverlängerer zur Herstellung von der präpolymeren Aufbaukomponente für a1) sind an sich bekannt. Beispiele dafür sind die weiter oben zur Herstellung der hydroxyl-terminierten Polyether erwähnten Diole und Polyole, insbesondere die Diole und Triole, wie 1,4-Butandiol, 1,1,1-Trimethylolpropan oder Hydrochinon-(2-hydroxyethylether), oder auch Diamine, wie Diaminoethan, 1,6-Diaminohexan, Piperazin, 2,5-Dimethylpiperazin, 1-Amino-3-aminomethyl-3,5,5-trimethylcyclohexan, 4,4'-Diaminocyclohexylmethan, 1,4-Diaminocyclohexan und 1,2-Propylendiamin oder auch Hydrazin, Aminosäurehydrazide, Hydrazide von Semicarbazidocarbonsäuren, Bis-hydrazide und Bis-semicarbazide.

Vorzugsweise verwendet man kurzkettige Diole oder Triole als Kettenverlängerungsmittel.

Das präpolymere Polyisocyanat a2) lässt sich in an sich bekannter Weise aus amino-terminierten Präpolymeren der Formel IIIb, insbesondere aus amino-terminierten Polyethern durch Umsetzung mit Phosgen oder mit Polyisocyanaten, bevorzugt mit Di- oder Triisocyanaten, besonders bevorzugt mit Diisocyanaten erhalten. Die amino-terminierten Präpolymeren enthalten neben den Aminogruppen im allgemeinen keine weiteren Reste mit aktiven Wasserstoffatomen. Präpolymere mit terminalen Aminogruppen leiten sich im allgemeinen von den weiter oben als Aufbaukomponente für a1) beschriebenen hydroxyl-terminierten Kondensations- oder Additionspolymeren, insbesondere von Polyethern ab.

Sie lassen sich erhalten, indem man besagte Kondenations- oder Additionspolymere enthaltend sekundäre Hydroxylgruppen mit Ammoniak umsetzt oder indem man besagte Kondensations- oder Additionspolymere enthaltend primäre Hydroxylgruppen, beispielsweise Polybutylenglykol, mit Acrylnitril umsetzt, und diese Produkte anschliessend hydriert.

Präpolymeres, isocyanat-terminiertes Poly-THF lässt lassen sich auch gemäss S. Smith et al. in Macromol. Sci. Chem., A7(7), 1399-1413 (1973) durch Abbrechen eines difunktionellen lebenden kationischen THF-Polymers mit Kaliumcyanat erhalten.

Als Polyisocyanat zur Herstellung der Komponenten a1) bzw. a2) verwendet man in der Regel aliphatische, cycloaliphatische, aromatische oder araliphatische Di-, Tri- oder Tetraisocyanate oder in solche Isocyanate überführbare Vorläufer.

Bevorzugt werden die aliphatischen, cycloaliphatischen oder araliphatischen Di- oder Triisocyanate, ganz besonders die aliphatischen oder cycloaliphatischen Diisocyanate.

Bei den bevorzugten aliphatischen Diisocyanaten handelt es sich in der Regel um geradkettige oder verzweigte Alkylen-$\alpha,\omega$-diisocyanate. Die Alkylenketten können gegebenenfalls durch Sauerstoff- oder Schwefelatome unterbrochen sein und können gegebenenfalls ethylenisch ungesättigte Bindungen enthalten.

Bevorzugt werden $\alpha,\omega$-Diisocyanate mit geradkettigen, gesättigten $C_2$-$C_{12}$ Alkylenresten.

Beispiele für solche Reste sind weiter oben bereits für $R^{14}$ definiert.

Bei den bevorzugten cycloaliphatischen Diisocyanaten handelt es sich in der Regel um Derivate, die sich von gegebenenfalls substituierten Cyclopentanen, Cyclohexanen oder Cycloheptanen ableiten. Es können auch zwei solcher Ringe über ein Brückenglied miteinander verbunden sein.

Beispiele für solche Reste sind 1,3- und 1,4-Cyclohexylen oder Dodecahydrodiphenylmethan-4,4'-diyl.

Ferner kann man Di- oder Triisocyanate verwenden, die sich von Dimer- oder Trimerfettsäuren ableiten. Diese Verbindungen lassen sich in an sich bekannter Weise aus den Fettsäuren durch Umlagerung in die entsprechenden Di- oder Triisocyanate erhalten (Hoffmann-, Curtius- oder Lossen-Umlagerungen).

Bevorzugte aromatische Diisocyanate leiten sich von einkernigen oder zweikernigen aromatischen Resten ab. Sie besitzen beispielsweise die Strukturen V oder VI, bei denen die phenolische OH-Gruppe durch eine NCO-Gruppe ersetzt ist und wobei eine zweite NCO-Gruppe an den aromatischen Kern gebunden ist.

Beispiele für aromatische Diisocyanatreste sind 1,2-, 1,3- oder 1,4-Phenylen oder 4,4'-Diphenylmethan.

Beispiele für araliphatische Diisocyanatreste sind 1,2- und 1,4-Xylylen.

Spezifische Beispiele für geeignete Polyisocyanate sind 2,4-Diisocyanatotoluol sowie dessen technische Gemische mit 2,6-Diisocyanatotoluol; 2,6-Diisocyanatotoluol, 1,5-Diisocyanatonaphthalin, 4,4'-Diisocyanatodiphenylmethan sowie technische Gemische verschiedener Diisocyanatodiphenylmethane (beispielsweise der 4,4'-und 2,4'-Isomeren), urethanisiertes 4,4'-Diisocyanatodiphenylmethan, carbodiimidisiertes 4,4'-Diisocyanatodiphenylmethan, das Uretdion des 2,4-Diisocyanatotoluols, Triisocyanatotriphenylmethan, das Addukt aus Diisocyanatotoluol und Trimethylolpropan, das Trimerisat aus Diisocyanatotoluol, Diisocyanato-m-xylylen, N,N'-Di-(4-methyl-3-isocyanatophenyl)-harnstoff, Mischtrimerisationsprodukte von Diisocyanatotoluol und 1,6-Diisocyanatohexamethylen, 1,6-Diisocyanatohexan, 3,5,5-Trimethyl-1-isocyanato-3-isocyanatomethylcyclohexan (Isophorondiisocyanat), N,N',N'''-Tri-(6-isocyanatohexyl)-biuret, 2,2,4-Trimethyl-1,6-diisocyanatohexan, 1-Methyl2,4-diisocyantocyclohexan, Dimeryldiisocyanat, 4,4'-Diisocyanatodicyclohexylmethan, trimeres Isophorondiisocyanat, trimeres Hexandiisocyanat und 2,6-Diisocyanatohexansäuremethylester.

Die Herstellung der Komponente a1) bzw. a2) erfolgt in an sich bekannter Weise durch Umsetzung der hydroxyl-, sulfhydryl- oder amino-terminierten elastomeren Präpolymerkomponente mit einem Polyisocyanat oder einem Gemisch dieser Komponenten. Die Umsetzungen können gegebenenfalls in Gegenwart eines Kettenverlängererers vorgenommen werden.

Die Herstellung der Komponente a1) bzw. a2) erfolgt in Substanz oder in gegenüber Isocyanaten inerten Lösungsmitteln.

Beispiele für inerte Lösungsmittel sind Ester, wie Ethylacetat, Butylacetat, Methylglycolacetat und Ethylglykolacetat; Ketone, wie Methylethylketon oder Methylisobutylketon; Aromaten, wie Toluol oder Xylol oder halogenierte Kohlenwasserstoffe, wie Trichlorethan oder Dichlormethan.

Nimmt man eine bestimmte zusätzliche Kettenverlängerungsreaktion über Urethan- oder Harnstoffgruppen in Kauf oder ist diese sogar erwünscht, so setzt man die hydroxyl-, sulfhydryl- oder aminogruppenhaltigen Präpolymeren und die gegebenenfalls anwesenden Monomeren gegebenenfalls zunächst bei 0-25 °C und unter Kühlung und später gegebenenfalls über mehrere Stunden unter Erwärmung auf vorzugsweise 50-120 °C in einem NCO/OH- bzw. NCO/SH- bzw. $NCO/NH_2$-Verhältnis von 1,5-2,5, bevorzugt 1,8-2,2, mit dem Di-oder Polyisocyanat um.

Ist eine Kettenverlängerungsreaktion nicht erwünscht, so verwendet man in der Regel einen wesentlich grösseren Ueberschuss an Di- oder Polyisocyanat, beispielsweise ein NCO/OH-, NCO/SH- oder $NCO/NH_2$-Verhältnis von 3-5, und keinen Kettenverlängerer, und verfährt ansonsten wie bei niedrigen NCO/OH-, NCO/SH- oder $NCO/NH_2$-Verhältnissen beschrieben. Nach der Reaktion wird gegebenenfalls das überschüssige Di- oder Polyisocyanat entfernt, beispielsweise durch Dünnschichtdestillation oder durch Lösungsmittelextraktion.

Die Umsetzung der hydroxyl-, sulfhydryl- oder amino-terminierten Präpolymeren mit Polyisocyanaten wird in Gegenwart an sich bekannter Katalysatoren durchgeführt.

Beispiele dafür sind Diazabicyclooctan, Dibutylzinndilaurat oder Zinn-II-octoat. Diese Katalysatoren werden in den üblichen Mengen eingesetzt, beispielsweise in Mengen von 0,001-2 Gew.-%, bezogen auf die Menge an Polyisocyanat.

Die Umsetzung des Polyisocyanats IIIa mit der H-aciden Komponente IVa erfolgt in Analogie zur oben beschriebenen Umsetzung der hydroxyl-, sulfhydryl- oder amino-terminierten Aufbaukomponente mit dem Polyisocyanat.

Die H-acide Komponente IVa wird dabei bevorzugt in einer solchen Menge vorgelegt, dass die freien NCO-Gruppen im wesentlichen durch die Reaktion verbraucht werden.

Sollen phenol-verkappte Verbindungen der Formel I hergestellt werden, so lässt sich als C-H acide Komponente IVa auch ein Gemisch aus einem oder mehreren Monophenolen und einem kleinen Anteil an Bisphenolen einsetzen. Ein Beispiel für solch ein Gemisch ist Cashewnussöl oder Nonylphenol/Bisphenol A. Dabei werden die Mengen an Ausgangsprodukten IIIa und IVa in der Regel so gewählt, dass eine Kettenverlängerung über die Bisphenolkomponente abläuft und ein im wesentlichen monophenol-verkapptes Derivat der Formel I entsteht. Es ist aber auch möglich, dass kleine Anteile an freien phenolischen Hydroxylgruppen in dem Gemisch aus Verbindungen der Formel I auftreten.

Verwendet man beim Verkappen der Präpolymeren einen Ueberschuss an Phenol, dann wird in der Regel das freie Phenol durch Reaktion mit Epoxidharzen umgesetzt.

Die Umsetzung von präpolymeren Polyisocyanaten IIIa mit Mercaptoalkoholen IVa wird in der Regel in Gegenwart von Sn-haltigen Katalysatoren, wie Dibutylzinndilaurat oder Zinn-II-octoat, durchgeführt.

Bei den amino-terminierten Präpolymeren IIIb in Verfahren b) bzw. den hydroxyl-terminierten Präpolymeren IIIc in Verfahren c) handelt es sich in der Regel um die präpolymeren Polyamine bzw. Polyhydroxylverbindungen, die bereits bei Verfahren a) beschrieben wurden, und die dort zur Herstellung der präpolymeren Polyisocyanatkomponenten IIIa eingesetzt wurden.

Die präpolymeren Chlorcarbonyloxyderivate IIId in Verfahren d) lassen sich aus den hydroxyl-terminierten Präpolymeren IIIc durch Umsetzung mit Phosgen erhalten.

Die Urethane IVb leiten sich von Lactamen H-$NR^4$-$R^5$ ab, worin $R^4$ und $R^5$ die oben definierte Bedeutung besitzen. Zur Herstellung dieser Urethane verkappt man diese Lactame in an sich bekannter Weise mit $R^6$-O-CO-Cl. Dabei besitzt $R^6$ die oben definierte Bedeutung.

Die Umsetzung der Komponenten IIIb und IVb bzw. IIIc und IVb bzw. IIId und IVd erfolgt im allgemeinen durch Vorgabe eines stöchiometrischen Verhältnisses beider Komponenten oder eines geringen Ueberschusses an Komponente IVb oder IVd und durch Erhitzen des Gemisches, so dass praktisch alle freien reaktiven Gruppen der Komponente IIIb, IIIc oder IIId verkappt werden. Die Reaktion wird bevorzugt in einem Lösungsmittel ausgeführt. Beispiele dafür sind weiter oben gegeben.

Das Molekulargewicht (Zahlenmittel) der Verbindungen der Formel I liegt üblicherweise im Bereich von 500-50'000, vorzugsweise im Bereich von 500-10'000, ganz besonders bevorzugt im Bereich von 500-3000.

Die Viskosität dieser Verbindungen beträgt in der Regel weniger als 150000 mPas, vorzugsweise weniger als 100000 mPas (gemessen bei 80 °C mit dem Epprecht Viskosimeter).

Die Strukturen der Verbindungen der Formel I, welche sich von der Umsetzung gemäss Verfahren a), b), c) oder d) ableiten, werden sich, je nach der Funktionalität des Präpolymerrestes $R^1$, unterscheiden.

In Verfahren a) wird diese Funktionalität beispielsweise durch die Funktionalität der hydroxyl-, sulfhydryl- oder amino-terminierten Präpolymeren, durch gegebenenfalls eingesetzte Kettenverlängerer, die Funktionalität des zur Herstellung von IIIa verwendeten Isocyanats und die Mengenverhältnisse der einzelnen Reaktanden bestimmt.

Bevorzugte Komponenten B) sind Verbindungen der Formel I, worin X -NH-ist und Y -O- bedeutet.

Ebenfalls bevorzugte Komponenten B) sind Verbindungen der Formel I, die erhältlich sind durch Umsetzung von

a) einem präpolymeren Polyisocyanat, welches
  a1) ein Addukt eines Polyisocyanats an eine präpolymere Polyhydroxyl- oder Polysulfhydrylverbindung oder an ein Gemisch solcher Verbindungen gegebenenfalls in Kombination mit einem Kettenverlängerer ist, oder
  a2) sich ableitet von einem präpolymeren Polyetheramin, mit
b) mindestens einem Monophenol.

Besonders bevorzugt werden Verbindungen der Formel I, worin Komponente a1) ein Addukt eines Polyisocyanats an ein hydroxyl-terminiertes Präpolymeres mit einem mittleren Molekulargewicht von 150 bis 10000 ist.

Insbesondere bevorzugt werden Verbindungen der Formel I, worin die Aufbaukomponente zur Herstellung von Komponente a1) ein hydroxylterminierter Polyether ist.

Diese Aufbaukomponente zur Herstellung von Komponente a1) wird vorzugsweise in Kombination mit Kettenverlängern eingesetzt.

Ganz besonders bevorzugt werden Verbindungen der Formel I, worin Komponente b) ein Gemisch eines Monophenols mit einer kleineren Menge eines Bisphenols, insbesondere Cashewnussöl, ist.

Ganz besonders bevorzugt werden Verbindungen der Formel I, worin das Polyisocyanat zur Herstellung von Komponente a1) ein aliphatisches, cycloaliphatisches, aromatisches oder araliphatisches Di- oder Triisocyanat ist.

In einer bevorzugten Ausführungsform arbeitet man bei der Herstellung der Komponente a1) mit einem hydroxyl-terminierten Polyether oder Polyester in Abwesenheit eines Kettenverlängerers und mit einer dem OH-Gehalt äquivalenten oder überschüssigen Menge an Polyisocyanat, verkappt das Isocyanat-Präpolymere anschliessend mit einem Monophenol und erhält Polyurethane der Formel IX

$$[\{R^{15}-O-\overset{O}{\overset{\|}{C}}-NH\}_{r}R^{16}-NH-\overset{O}{\overset{\|}{C}}-O]_{m}R^{17} \qquad (IX),$$

worin $R^{15}$ der Rest eines Monophenols nach dem Entfernen der phenolischen Hydroxylgruppe ist, r eine ganze Zahl zwischen 1 und 3 ist, $R^{16}$ der r+1-wertige Rest eines aliphatischen, cycloaliphatischen, aromatischen oder araliphatischen Polyisocyanates nach dem Entfernen der Isocyanatgruppen ist, $R^{17}$ ein m-wertiger hydroxyl-terminierter Polyester- oder Polyetherrest nach dem Entfernen der endständigen OH-Gruppen ist, mit der Massgabe, dass die Reste $R^{15}$ und $R^{16}$ innerhalb eines gegebenen Moleküls unterschiedlich sein können.

Bevorzugt werden Zusammensetzungen enthaltend als Komponente B) Verbindungen der Formel IX.

Der Index m ist vorzugsweise 2 oder 3, ganz besonders bevorzugt 2. Der Index r ist vorzugsweise 1. Bevorzugte Komponenten B) sind Verbindungen der Formel IX, worin m 2 oder 3 bedeutet, r 1 ist, -O-$R^{15}$ ein Rest der Formel V oder VI ist, $R^{16}$ sich ableitet von einem aliphatischen, cycloaliphatischen oder aromatischen Diisocyanat und $R^{17}$ ein zwei- oder dreiwertiger Rest eines hydroxylterminierten Polyesters oder Polyethers mit einem Molekulargewicht von 150 bis 10000, insbesondere 500 bis 10000,nach dem Entfernen der endständigen Hydroxylgruppen ist.

Ganz besonders bevorzugte Komponenten B) sind Verbindungen der Formel IX, worin m 2 oder 3 bedeutet, r 1 ist, -O-$R^{15}$ ein Rest der Formel V ist, $R^{16}$ sich ableitet von einem aliphatischen oder cycloaliphatischen Diisocyanat und $R^{17}$ ein zwei- oder dreiwertiger Rest eines Polyalkylenetherpolyols mit einem Molekulargewicht von 1000 bis 3000 nach dem Entfernen der endständigen Hydroxylgruppen ist.

Zu den besonders bevorzugten Komponenten B) dieses zuletzt definierten Typs zählen diejenigen, worin m 2 bedeutet und $R^{17}$ ein Strukturelement der Formel X ist

$$-(C_sH_{2s}-O-)_x-C_sH_{2s}- \qquad (X)$$

worin s 3 oder 4 bedeutet, x eine ganze Zahl von etwa 5 bis 90 ist und die Einheiten $-C_sH_{2s}-O-$ innerhalb eines gegebenen Strukturelementes der Formel X im Rahmen der gegebenen Definitionen unterschiedlich sein können.

Beispiele für Strukturelemente der Formel X sind

$$-(CH_2-CH(CH_3)-O)_x-CH_2CH(CH_3)- \;,\; -(CH_2-CH_2-CH_2-CH_2-O)_x-CH_2CH_2CH_2-CH_2-$$

sowie Copolymere enthaltend diese Strukturelemente.

Zu den ebenfalls bevorzugten Komponenten B) dieser Erfindung zählen Verbindungen, die erhältlich sind durch Umsetzung von

a1) einem Addukt einer im wesentlichen äquivalenten Menge eines Diisocyanates mit einem Gemisch aus einem di- oder tri-hydroxyl-terminierten Polyether oder Polyester und weniger als 1 Mol-%, bezogen auf das hydroxyl-terminierte Präpolymere, eines kurzkettigen Diols oder Triols und

b) einer dem NCO-Gehalt im wesentlichen äquivalenten Menge eines Monophenols.

In einer weiteren bevorzugten Ausführungsform arbeitet man bei der Herstellung der Komponente a2) mit einem amino-terminierten Polyalkylenether, setzt diesen in Abwesenheit eines Kettenverlängerers mit einer dem $NH_2$-Gehalt äquivalenten oder überschüssigen Menge an Diisocyanat oder mit Phosgen um und verkappt das erhaltene Polyisocyanat mit einem Monophenol IVa. Man erhält so eine Verbindung der Formel XI

$$\left[ R^{15}-O-\left(-\overset{\displaystyle O}{\overset{\|}{C}}-NH-R^{18}-\right)_t-\overset{\displaystyle O}{\overset{\|}{C}}-NH-\right]_m-R^{19} \qquad (XI),$$

worin $R^{15}$ und m die oben definierte Bedeutung besitzen, t 0 oder 1 ist, $R^{18}$ der zweiwertige Rest eines aliphatischen, cycloaliphatischen, aromatischen oder araliphatischen Diisocyanats nach dem Entfernen der Isocyanatgruppen ist und $R^{19}$ der m-wertige Rest eines amino-terminierten Polyalkylenethers nach dem Entfernen der endständigen $NH_2$-Gruppen ist.

Zusammensetzungen enthaltend Verbindungen der Formel XI als Komponente B) werden bevorzugt.

Besonders bevorzugte Zusammensetzungen enthalten Verbindungen der Formel XI als Komponente B), worin m 2 oder 3 bedeutet, -O-$R^{15}$ ein Rest der Formel V oder VI ist, $R^{18}$ sich ableitet von einem aliphatischen, cycloaliphatischen oder aromatischen Diisocyanat und $R^{19}$ ein zwei- oder dreiwertiger Rest eines amino-terminierten Polyalkylenethers mit einem Molekulargewicht von 150 bis 10000 nach dem Entfernen der endständigen Aminogruppen ist.

Ganz besonders bevorzugte Zusammensetzungen enthalten Verbindungen der Formel XI als Komponente B), worin m 2 bedeutet, -O-$R^{15}$ ein Rest der Formel V ist, t 0 ist, und $R^{19}$ sich ableitet von einem zweiwertigen amino-terminierten Polyalkylenether mit einem Molekulargewicht von 500 bis 6000.

Ganz besonders bevorzugte Zusammensetzungen enthalten Verbindungen der Formel XI als Komponente B), worin t 1 ist, m 2 bedeutet, -O-$R^{15}$ ein Rest der Formel V ist, $R^{18}$ der zweiwertige Rest eines aliphatischen oder cycloaliphatischen Diisocyanats nach dem Entfernen der Isocyanatgruppen ist und $R^{19}$ sich ableitet von einem zweiwertigen amino-terminierten Polyalkylenether mit einem Molekulargewicht von 500 bis 6000.

Zu den besonders bevorzugten Komponenten B) dieser beiden zuletzt definierten Typen zählen diejenigen, worin $R^{19}$ ein Strukturelement der Formeln XII, XIII, XIV, XV oder XVI ist

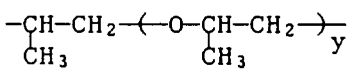 (XII), 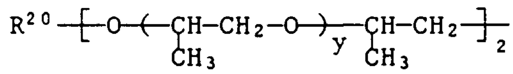 (XIII),

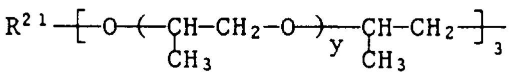 (XIV), $-(CH_2)_4-[O-(CH_2)_4]_z-$ (XV),

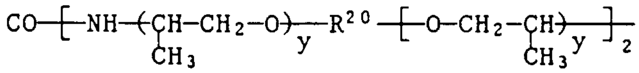 (XVI),

worin y 5 bis 90, vorzugsweise 10 bis 70 ist, z 10 bis 40 bedeutet, $R^{20}$ ein Rest eines aliphatischen Diols nach dem Entfernen der beiden OH-Gruppen ist und $R^{21}$ ein Rest eines aliphatischen Triols nach dem Entfernen der drei OH-Gruppen ist.

Die erfindungsgemässen Zusammensetzungen aus A) und B) lassen sich mit Epoxidharzen zu gehärteten Produkten mit den weiter oben geschilderten vorteilhaften Eigenschaften verarbeiten.

Die Erfindung betrifft daher auch Zusammensetzungen enthaltend Komponenten A) und B), wie oben definiert, und C) ein Epoxidharz mit wenigstens zwei 1,2-Epoxidgruppen pro Molekül; oder enthaltend ein Addukt aus Komponenten A) und einem Epoxidharz, sowie Komponente B) und gegebenenfalls Komponente C).

Die Herstellung der erfindungsgemässen Zusammensetzungen kann in üblicher Weise durch Vermischen der Komponenten mit Hilfe bekannter Mischaggregate, wie Rührer, Kneter oder Walzen, erfolgen.

Als Komponente C) oder zur Herstellung der Addukte kann im Prinzip jede in der Technik der Epoxidharze übliche Verbindung eingesetzt werden.

Beispiele für Epoxidharze sind:

I) Polyglycidyl- und Poly-($\beta$-methylglycidyl)-ester erhältlich durch Umsetzung einer Verbindung mit mindestens zwei Carboxylgruppen im Molekül und Epichlorhydrin bzw. $\beta$-Methyl-epichlorhydrin. Die Umsetzung erfolgt zweckmässig in der Gegenwart von Basen.

Als Verbindung mit mindestens zwei Carboxylgruppen im Molekül können aliphatische Polycarbonsäuren verwendet werden. Beispiele für diese Polycarbonsäuren sind Oxalsäure, Bernsteinsäure, Glutarsäure, Adipinsäure, Pimelinsäure, Korksäure, Azelainsäure oder dimerisierte bzw. trimerisierte Linolsäure.

Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.

Weiterhin können aromatische Polycarbonsäuren Verwendung finden, wie beispielsweise Phthalsäure, Isophthalsäure oder Terephthalsäure.

II) Polyglycidyl- oder Poly-($\beta$-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylenglycol und höheren Poly-(oxyethylen)-glycolen, Propan-1,2-diol oder Poly-(oxypropylen)-glycolen, Propan1,3-diol, Butan-1,4-diol, Poly-(oxytetramethylen)-glycolen, Pentan-1,5-diol, Hexan-1,6-diol, Hexane-2,4,6-triol, Glyzerin, 1,1,1-Trimethylolpropan, Pentaerythrit, Sorbit, sowie von Polyepichlorhydrinen.

Sie leiten sich aber auch beispielsweise ab von cycloaliphatischen Alkoholen wie 1,4-Cyclohexandimethanol, Bis-(4-hydroxycyclohexyl)-methan oder 2,2-Bis(4-hydroxycyclohexyl)-propan oder sie besitzen

aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten wie beispielsweise von Resorcin oder Hydrochinon; oder sie basieren auf mehrkernigen Phenolen wie beispielsweise Bis-(4-hydroxyphenyl)-methan, 4,4'-Dihydroxydiphenyl, Bis-(4-hydroxyphenyl)-sulphon, 1,1,2,2-Tetrakis-(4-hydroxyphenyl)-ethan, 2,2-Bis-(4-hydroxyphenyl)-propan, 2,2-Bis-(3,5-dibrom-4-hydroxyphenyl)-propan sowie von Novolaken erhältlich durch Kondensation von Aldehyden wie Formaldehyd, Acetaldehyd, Chloral oder Furfuraldehyd mit Phenolen wie Phenol, oder mit Phenolen, die im Kern mit Chloratomen oder $C_1$-$C_9$ Alkylgruppen substituiert sind, wie beispielsweise 4-Chlorphenol, 2-Methylphenol oder 4-tert.Butylphenol oder durch Kondensation mit Bisphenolen, so wie oben beschrieben.

III) Poly-(N-glycidyl) Verbindungen erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, n-Butylamin, Bis-(4-aminophenyl)-methan, m-Xylylendiamin oder Bis-(4-methylaminophenyl)-methan.

Zu den Poly-(N-glycidyl) Verbindungen zählen aber auch Triglycidylisocyanurat, N,N'-Diglycidylderivate von Cycloalkylenharnstoffen, wie Ethylenharnstoff oder 1,3-Propylenharnstoff, und Diglycidylderivate von Hydantoinen, wie von 5,5-Dimethylhydantoin.

IV) Poly-(S-glycidyl) Verbindungen, beispielsweise Di-S-glycidylderivate, die sich von Dithiolen, wie beispielsweise Ethan-1,2-dithiol oder Bis-(4-merkaptomethylphenyl)-ether ableiten.

V) Cycloaliphatische Epoxidharze, beispielsweise Bis-(2,3-epoxycyclopentyl)-ether, 2,3-Epoxicyclopentylglycidylether, 1,2-Bis-(2,3-epoxycyclopentyloxy)-ethan oder 3,4-Epoxycyclohexylmethyl-3',4'-epoxycyclohexancarboxylat.

Es lassen sich aber auch Epoxidharze verwenden, bei denen die 1,2-Epoxidgruppen an unterschiedliche Heteroatome bzw. funktionelle Gruppen gebunden sind; zu diesen Verbindungen zählen beispielsweise das N,N,O-Triglycidylderivat des 4-Aminophenols, der Glycidylether-glycidylester der Salicylsäure, N-Glycidyl-N'-(2-glycidyloxypropyl)-5,5-dimethylhydantoin oder 2-Glycidyloxy-1,3-bis-(5,5-dimethyl-1-glycidylhydantoin3-yl)-propan.

Besonders bevorzugt als Epoxidharze werden Polyglycidylether von Bisphenolen, wie beispielsweise von 2,2-Bis-(4-hydroxyphenyl)-propan oder Bis-(4-hydroxyphenyl)-methan, von Novolaken, die durch Umsetzung von Formaldehyd mit einem Phenol gebildet werden, oder von den oben erwähnten aliphatischen Diolen, insbesondere von Butan-1,4-diol, sowie Addukte von Bisphenol A und glycidylisierten aliphatischen Diolen.

Die erfindungsgemässen härtbaren Zusammensetzungen enthalten in der Regel noch zusätzliche dem Fachmann bekannte Härter D), gegebenenfalls in Kombination mit einem Beschleuniger E).

Beispiele für Härter D) sind aliphatische, cycloaliphatische, aromatische und heterocyclische Amine, wie Bis-(4-aminophenyl)-methan, Anilin-Formaldehyd-Harze, Bis-(4-aminophenyl)-sulfon, Propan-1,3-diamin, Hexamethylendiamin, Diethylentriamin, Triethylentetramin, 2,2,4-Trimethylhexan-1,6-diamin, m-Xylylendiamin, Bis-(4-aminocyclohexyl)methan, 2,2-Bis-(4-aminocyclohexyl)-propan und 3-Aminomethyl-3,5,5-trimethylcyclohexylamin (Isophorondiamin); Polyaminoamide, wie beispielsweise solche aus aliphatischen Polyaminen und dimerisierten oder trimerisierten Fettsäuren; Polyphenole, wie Resorcin, Hydrochinon, 2,2-Bis(4-hydroxyphenyl)propan (Bisphenol A) und Phenol-Aldehyd-Harze; Polythiole, wie die im Handel unter der Bezeichnung "Thiokole®" erhältlichen Polythiole; Polycarbonsäuren und ihre Anhydride, wie z.B. Phthalsäureanhydrid, Tetrahydrophthalsäureanhydrid, Hexahydrophthalsäureanhydrid, Hexachlorendomethylentetrahydrophthalsäureanhydrid, Pyromellitsäuredianhydrid, Benzophenon-3,3',4,4'-tetracarbonsäuredianhydrid, die Säuren der zuvorgenannten Anhydride sowie auch Isophthalsäure und Terephthalsäure. Es können auch katalytisch wirkende Härtungsmittel verwendet werden, wie beispielsweise tertiäre Amine [z.B. 2,4,6-Tris-(dimethylaminoethyl)-phenol];Imidazole oder Mannichbasen; Alkalimetallalkoholate (z.B. Na-Alkoholat von 2,4-Dihydroxy-3-hydroxymethylpentan); Zinnsalze von Alkansäuren (z.B. Zinnoctanoat); Friedel-Crafts-Katalysatoren, wie Bortrifluorid und Bortrichlorid und ihre Komplexe und Chelate, die durch Umsetzung von Bortrifluorid mit z.B. 1,3-Diketonen erhalten werden; sowie Amidine, vorzugsweise Dicyandiamid.

Beispiele für Beschleuniger E) sind tertiäre Amine, deren Salze oder quaternäre Ammoniumverbindungen, wie Benzyldimethylamin, 2,4,6-Tris-(dimethylaminomethyl)phenol, 1-Methylimidazol, 2-Ethyl-4-methylimidazol, 4-Aminopyridin, Tripentylammoniumphenolat oder Tetramethylammoniumchlorid; oder Alkalimetallalkoholate, wie Na-Alkoholate von 2,4-Dihydroxy-3-hydroxymethylpentan; oder substituierte Harnstoffe, wie N-(4-Chlorphenyl)-N'N'-dimethylharnstoff oder N-(3-Chlor-4-methylphenyl)-N'N'-dimethylharnstoff (Chlortoluron).

Je nach Anteil der Komponenten A) und B) lassen sich die Eigenschaften des gehärteten Endproduktes variieren.

Die folgenden Prozentangaben beziehen sich jeweils auf das Gesamtgewicht der Komponenten A), B) und C).

Wünscht man Produkte mit hoher Festigkeit, hoher Glasübergangstemperatur, hoher Schälfestigkeit, hoher Schlagzähigkeit und hoher Rissfortpflanzungsbeständigkeit (Risszähigkeit), so sollte der Anteil der Komponenten A) und B) in der Regel 60 Gew.% nicht überschreiten. Solche Systeme sind in der Regel heterogen. Die untere Grenze richtet sich nach den gewünschten Eigenschaften, beispielsweise der Schälfestigkeit. In der Regel sollten Komponenten A) und B) mehr als 5 Gew.%, bevorzugt mehr als 10 Gew.%, ausmachen.

Wünscht man hingegen Produkte mit einer möglichst hohen Flexibilität, so sollten wenigstens 40 Gew.%, bevorzugt mehr als 60 Gew.%, an Komponenten A) und B) vorliegen.

Wenn Komponente A) und/oder B) durch Adduktbildung mit einem Epoxidharz modifiziert worden ist, so ist eine separate Komponente C) nicht unbedingt erforderlich.

Bei hochflexiblen Systemen modifiziert man Komponente A) bevorzugt durch Adduktbildung mit Epoxidharzen; besonders bevorzugt werden Addukte von flüssigen Acrylnitril-Butadien-Copolymeren mit gegenüber Epoxidharzen reaktiven Gruppen an Glycidylether von aliphatischen Diolen, wie 1,4-Butandiol oder 1,6-Hexandiol.

Das Gewichtsverhältnis von A) zu B) kann in weiten Grenzen variiert werden. Bevorzugter Bereich von A) zu B) ist 50:1 bis 1:50, besonders bevorzugt ist 20:1 bis 1:10, ganz besonders bevorzugt ist 5:1 bis 1:5.

Der Anteil des Epoxidharzes C) an der Gesamtmenge aus A), B) und C) kann ebenfalls in weiten Grenzen variiert werden. Für gehärtete Produkte mit einer erhöhten Flexibilität wird man im allgemeinen geringere Mengen von C), beispielsweise 10 bis 30 Gew.% einsetzen, wobei Komponente C) auch als Addukt an A) vorliegen kann, während für gehärtete Produkte mit einer hohen Festigkeit im allgemeinen grössere Mengen an C), beispielsweise 50 bis 95 Gew.%, bevorzugt 60-80 Gew.%, eingesetzt werden.

Die Menge an Härter D) bzw. an Beschleuniger E) ist im allgemeinen abhängig vom Härtertyp und wird vom Fachmann in an sich bekannter Weise ausgewählt.

Bevorzugt sind hitzehärtbare Systeme enthaltend Komponente A), B) und C) in Kombination mit primären und/oder sekundären aromatischen Aminen oder mit Amidinen als Härter D).

Besonders bevorzugter Härter ist Dicyandiamid. In diesem Fall setzt man auf ein Mol Epoxidgruppen vorzugsweise 0,1-0,5 Mol des Härters ein.

Die Härtung der erfindungsgemässen Zusammensetzungen kann bei tieferen Temperaturen oder bei höheren Temperaturen vorgenommmen werden. Bevorzugt sind Härtungstemperaturen über 80 °C.

Im allgemeinen liegen die Härtungstemperaturen bei der Heisshärtung zwischen 80 und 250 °C, bevorzugt zwischen 100 und 180 °C. Die Härtung kann gewünschtenfalls auch in zwei Stufen vorgenommen werden, indem man z.B. den Härtungsvorgang unterbricht oder, falls man ein Härtungsmittel für höhere Temperaturen einsetzt, die härtbare Mischung bei tieferen Temperaturen teilweise härten lässt. Die dabei erhaltenen Produkte sind noch schmelzbare und lösliche Präkondensate (sogenannte "B-Stufenharze") und eignen sich z.B. für Pressmassen, Sinterpulver oder Prepregs.

Gewünschtenfalls kann man den härtbaren Gemischen zur weiteren Herabsetzung der Viskosität reaktive Verdünner, wie z.B. Styroloxid, Butylglycidylether, 2,2,4-Trimethylpentylglycidylether, Phenylglycidylether, Kresylglycidylether oder Glycidylester von synthetischen, hochverzweigten, in der Hauptsache tertiären aliphatischen Monocarbonsäuren, zusetzen.

Als weitere übliche Zusätze können die erfindungsgemässen Gemische ferner Weichmacher, Streck-, Füll- und Verstärkungsmittel, wie beispielsweise Steinkohlenteer, Bitumen, Textilfasern, Glasfasern, Asbestfasern, Borfasern, Kohlenstoff-Fasern, mineralische Silikate, Glimmer, Quarzmehl, Aluminiumoxidhydrat, Bentonite, Kaolin, Kieselsäureaerogel oder Metallpulver, z.B. Aluminiumpulver oder Eisenpulver, ferner Pigmente und Farbstoffe, wie Russ, Oxidfarben und Titandioxid, Flammschutzmittel, Thixotropiemittel, Verlaufmittel ("flow control agents"), wie Silicone, Wachse und Stearate, die zum Teil auch als Formtrennmittel Anwendung finden, Haftvermittler, Antioxidantien und Lichtschutzmittel enthalten.

Die gehärteten Produkte zeichnen sich durch die anfangs geschilderten vorteilhaften Eigenschaften aus.

Die Erfindung betrifft daher auch die Produkte erhältlich durch Härtung von Zusammensetzungen enthaltend A), B) und C); dabei können Komponenten A) und/oder B) auch als Addukte an Epoxidharze eingesetzt werden.

Die erfindungsgemässen Gemische lassen sich beispielsweise als Klebstoffe, Klebefilme, Patches, Matrixharze, Lacke oder Dichtungsmassen oder ganz allgemein zur Herstellung von gehärteten Produkten verwenden. Sie können in jeweils dem speziellen Anwendungsgebiet angepasster Formulierung, in ungefülltem oder gefülltem Zustand, z.B. als Anstrichmittel, Beschichtungsmassen, Lacke, Pressmassen, Tauchharze, Giessharze, Imprägnierharze, Laminierharze, Matrixharze und Klebemittel verwendet werden.

Die Erfindung betrifft auch die Verwendung der erfindungsgemässen Gemische für die oben erwähnten Zwecke.

Die folgenden Beispiele erläutern die Erfindung. Dabei bedeuten Mengenangaben Gewichtsteile, falls keine anderen Angaben vorliegen.

Beispiele 1-8:

A. Herstellung und Prüfung von Klebstofformulierungen

Allgemeine Arbeitsvorschrift:

Auf einem Dreiwalzenstuhl werden die in Tabelle I beschriebenen Mischungen, welche die unter Teil B beschriebenen Präpolymere enthalten, hergestellt und zur Verklebung von entfettetem, sandgestrahltem, 1,5 mm-dickem Aluminium und von entfettetem 1,5 mm-dickem Stahl eingesetzt, wobei die Prüfkörper mit einer Ueberlappung von 2,5 x 1,25 $cm^2$ 30 Minuten bei 180 °C gehärtet werden. Mit diesen Substraten wird die Zugscherfestigkeit ($N/mm^2$) bestimmt.

Ferner wird die Winkelschälfestigkeit ("T-Peel") auf 0,8 mm dickem entfettetem Stahl gemessen, wobei mit der gleichen Mischung 1 Stunde bei 180 °C erhärtet wird.

Die Glasübergangstemperatur ($T_g$) wird mittels dynamisch-mechanischer Spektroskopie (Du Pont 9000 Thermoanalyse-Gerät) an einem 1 Stunde/180 °C gehärteten Glasfaserprepreg, der mit der obigen Mischung imprägniert wurde, bestimmt.

B. Herstellung von Präpolymeren

Addukt 1A

In einem Planschliffkolben mit Rührer, Stickstoffeinleitung und Rückflusskühler werden 730 g Bisphenol A-diglycidether (Epoxidgehalt 5,4 Val/kg), 200 g carboxylterminiertes Acrylnitril/Butadien Copolymer (26 % Acrylnitrilgehalt, Säurezahl 32 mg KOH/g), 64 g Bisphenol A und 5 g Triphenylphosphin 3 Stunden bei 130 °C erhitzt bis sich ein viskoses Epoxidharz mit einem Epoxidgehalt von 3,3 Val/kg mit einer Viskosität nach Epprecht von 130 000 mPas (40 °C) gebildet hat.

Präpolymer 1B

Unter Stickstoff gibt man innerhalb einer Stunde bei 100 °C eine Mischung aus 354 g trockenem dihydroxyl-terminiertem Polypropylenglykol (MW = 2000), 1,8 g Trimethylolpropan und 0,1 ml Dibutylzinndilaurat zu 88,8 g Isophorondiisocyanat. Nach zweistündigem Rühren bei 100 °C gibt man 48 g p-Kresol zu und rührt weitere 3 Stunden bei 100 °C bis kein freies Isocyanat mehr nachweisbar ist. Man erhält ein viskoses Harz mit den folgenden Analysendaten:
Viskosität (nach Epprecht): 120320 mPas (25 °C),
$M_n$ = 2750, $M_w/M_n$ = 2,3 (GPC).

Präpolymer 2

Unter Stickstoff gibt man zu 54,4 g Hexamethylendiisocyanat innerhalb von 1 Stunde bei 60 °C eine Mischung aus 354 g trockenem dihydroxylterminiertem Polypropylenglykol (MW = 2000) und 0,1 ml Dibutylzinndilaurat. Dann setzt man 1,8 g Trimethylolpropan zu, rührt 1 Stunde bei 100 °C bis ein Isocyanatgehalt von 2,7 % erreicht ist, und lässt dann 3 Stunden bei 100 °C mit 31,1 g p-Kresol reagieren bis kein freies Isocyanat mehr nachweisbar ist. Man erhält ein viskoses Harz mit den folgenden Analysendaten:
Viskosität (nach Epprecht): 133120 mPas (25 °C);
Molekulargewicht (GPC): $M_n$ = 4660 ($M_w/M_n$ = 3,5).

Präpolymer 3

Unter Stickstoff gibt man zu 56,3 g Toluylendiisocyanatisomerengemisch eine Mischung aus 354 g trockenem dihydroxylterminiertem Polypropylenglykol und 0,1 ml Dibutylzinndilaurat innerhalb 1 Stunde bei 100 °C und rührt nach Zugabe von 1,8 g Trimethylolpropan eine Stunde bei 100 °C bis ein Isocyanatgehalt

von 2,6 % erreicht ist. Dann gibt man 30 g p-Kresol zu, rührt 3 Stunden bei 100 °C bis kein freies Isocyanat mehr nachweisbar ist und isoliert ein viskoses Harz mit den folgenden Analysendaten:
Viskosität (nach Epprecht): 184320 mPas (25 °C);
Molekulargewicht (GPC): $M_n$ = 2850, $M_w/M_n$ = 5,6.

Präpolymer 4

Unter Stickstoff gibt man zu 54,4 g Hexamethylendiisocyanat innerhalb einer Stunde bei 100 °C 354 g trockenes dihydroxylterminiertes Polytetrahydrofuran (MW = 2000) enthaltend 0,1 ml Dibutylzinndilaurat, setzt 1,8 g Trimethylolpropan zu und rührt eine weitere Stunde bei 100 °C bis ein Isocyanatgehalt von 2,8 % erreicht ist. Dann lässt man 3 Stunden bei 100 °C mit 32,3 g p-Kresol reagieren bis kein freies Isocyanat mehr nachweisbar ist und erhält ein viskoses Harz mit den folgenden Analysendaten:
Viskosität (nach Epprecht): 14080 mPas (80 °C);
Molekulargewicht (GPC): $M_n$ = 2200, $M_w/M_n$ = 9,9.

Präpolymer 5

Unter Stickstoff gibt man zu 54,4 g Hexamethylendiisocyanat innerhalb von 1 Stunde bei 100 °C 354 g trockenes dihydroxylterminiertes Polypropylenglykol (MW = 2000) enthaltend 0,1 ml Dibutylzinndilaurat, setzt dann 1,8 g Trimethylolpropan zu und rührt eine Stunde bis ein Isocyanatgehalt von 2,6 % erreicht ist. Dann lässt man 3 Stunden bei 100 °C mit 34,4 g Hydrochinonmonomethylether reagieren bis kein freies Isocyanat mehr nachweisbar ist und erhält ein viskoses Harz mit den folgenden Analysendaten:
Viskosität (nach Epprecht): 60160 mPas (25 °C);
Molekulargewicht (GPC): $M_n$ = 4840, $M_w/M_n$ = 3,3.

Präpolymer 6

Unter Stickstoff gibt man zu 88,1 g Isophorondiisocyanat bei 100 °C innerhalb 1 Stunde unter Rühren eine Mischung aus 354 g dihydroxylterminiertem Polypropylenglykol (MW = 2000), 1,8 g Trimethylolpropan und 0,1 ml Dibutylzinndilaurat. Nach 2 stündigem Rühren bei 100 °C gibt man 32 g Mercaptoethanol zu und rührt 20 Stunden bei 100 °C bis kein freies Isocyanat mehr nachweisbar ist. Man erhält ein viskoses Harz mit folgenden Analysendaten:
Viskosität (nach Epprecht): 204800 mPas (25 °C);
Molekulargewicht (GPC): $M_n$ = 1690, $M_w/M_n$ = 6,7.

Präpolymer 7

Man erhitzt eine Mischung aus 105 g Präpolymer 6 und 130 g eines Tetraglycidethers des 2,2,6,6-Tetrahydroxymethylcyclohexan-1-ols (Epoxidgehalt 7,4 Val/kg) vier Stunden bei 60 °C und erhält ein Epoxidharz mit den folgenden Analysendaten:
Epoxidgehalt: 4,1 Val/kg;
Viskosität (nach Epprecht): 10560 mPas (80 °C).

Präpolymer 8

Man erhitzt eine Mischung aus 105 g Präpolymer 6 und 70 g eines Bisphenol A-diglycidethers (Epoxidgehalt 5,4 Val/kg) vier Stunden bei 60 °C und erhält ein Epoxidharz mit den folgenden Analysendaten:
Epoxidgehalt: 2,2 Val/kg;
Viskosität (nach Epprecht): 174080 mPas (25 °C).

Präpolymer 9

Unter Stickstoff wird innerhalb einer Stunde bei 100 °C zu 54,4 g Hexamethylendiisocyanat eine Mischung aus 354 g dihydroxylterminiertem Polypropylenglykol (MW = 2000), 1,8 g Trimethylolpropan und 0,1 ml Dibutylzinndilaurat gegeben und weitere 2 Stunden gerührt bis ein Präpolymer mit 2,4 % freiem Isocyanatgehalt gebildet ist. Dann gibt man 32 g Caprolactam zu und rührt 3 Stunden bei 100 °C bis kein freies Isocyanat mehr nachweisbar ist. Man erhält ein viskoses Harz mit den folgenden Analysendaten:

Viskosität (nach Epprecht): 19200 mPas (25 °C).

Präpolymer 10

Unter Stickstoff wird innerhalb von einer Stunde bei 100 °C zu 88,8 g Isophorondiisocyanat eine Mischung aus 354 g dihydroxylterminiertem Polytetrahydrofuran (MW = 2000), 1,8 Trimethylolpropan und 0,1 ml Dibutylzinndilaurat gegeben und weitere zwei Stunden gerührt. Dann gibt man 32 g Caprolactam zu und rührt 3 Stunden bis kein freies Isocyanat mehr nachweisbar ist. Man erhält 460 g eines viskosen Harzes mit den folgenden Analysendaten:
Viskosität (nach Epprecht): 28160 mPas (40 °C).

Präpolymer 11

Unter Stickstoff gibt man innerhalb von 30 Minuten zu 33,6 g Hexamethylendiisocyanat eine Mischung aus 200 g diaminoterminiertem Polypropylenglykol des Molekulargewichts 2000 (Jeffamine® D2000 der Firma Texaco) und 23,7 g p-Kresol. Dann erhitzt man auf 100 °C, gibt 0,1 ml Dibutylzinndilaurat zu und rührt 3 Stunden bei 100 °C. Man erhält ein viskoses isocyanatfreies Harz mit den folgenden Analysendaten:
Viskosität nach Epprecht: $\eta_{25}$ = 420000 mPas;
Molekulargewicht (GPC): $M_n$ = 1800, $M_w/M_n$ = 9,0.

Präpolymer 12

Unter Stickstoff gibt man zu 54,4 g Hexamethylendiisocyanat innerhalb 1 Stunde bei 100 °C eine Mischung aus 354 g trockenem dihydroxylterminiertem Polypropylenglykol ($M_n$ = 2000) und 0,3 ml Dibutylzinndilaurat. Nach Zusatz von 1,8 g Trimethylolpropan rührt man 3 Stunden bei 100 °C bis ein Isocyanatgehalt von 2,2 % erreicht ist, dann versetzt man bei 100 °C mit 120 g Cashewnut-öl (Phenolgehalt 3,4 Val/kg) und rührt weitere 3 Stunden bei 100 °C bis sich ein isocyanatfreies viskoses Harz mit den folgenden Analysendaten gebildet hat:
Viskosität $\eta_{25}$ = 33280 mPas.

Präpolymer 13

Unter Stickstoff legt man 88 g Isophorondiisocyanat vor, gibt unter Rühren innerhalb 1 Stunde bei 100 °C eine Mischung aus 50 g hydroxylterminiertem Polybutadien (ARCO RD 45 HT) und 0,1 ml Dibutylzinndilaurat zu, rührt 1 Stunde bei 100 °C, gibt dann 250 g trockenes dihydroxylterminiertes Polybutylenglykol ($M_n$ = 2000) innerhalb 1 Stunde zu und rührt 2 Stunden. Zu diesem isocyanathaltigen Präpolymer gibt man nun 23,8 g Hydrochinonmonomethylether und rührt 3 Stunden bei 100 °C. Man erhält ein viskoses isocyanatfreies Harz mit den folgenden Analysedaten:
Viskosität nach Epprecht: $\eta_{40}$ = 207360 mPas;
Molekulargewicht (GPC): $M_n$ = 3370, $M_w/M_n$ = 6,2.

C. Formulierung und Test von Klebstoffen

Die Resultate der unter A. beschriebenen Tests und die Zusammensetzung der Klebstoffe findet man in der folgenden Tabelle I.

Tabelle I

| Beispiel Nr. | Diglycidylether auf Bisphenol A-Basis (Epoxidgehalt 5,4 Val/kg) (g) | Butandioldiglycidylether (Epoxidgehalt 9,2 Val/kg) (g) | Glycidyloxypropyltrimethoxysilan (g) | Wollastonit P1 (g) | Dicyandiamid (g) | Chlortoluron (g) | Pyrogene Kieselsäure (g) | Addukt 1A | Präpolymer Nr. | Präpolymer (g) | Zugscherfestigkeit auf Al ($N/mm^2$) | Zugscherfestigkeit auf Stahl ($N/mm^2$) | T-Peel auf entfettetem Stahl (N/mm) | Bruchbild (% Kohäsionsbruch) | Glasübergangstemperatur*) (°C) |
|---|---|---|---|---|---|---|---|---|---|---|---|---|---|---|---|
| 1 | 70 | 5 | 0,1 | 30 | 9,8 | 0,5 | 7,0 | 30 | 1B | 30 | 25,1 | 24,1 | 2,4 | 40 | 63 |
| 2 | 70 | 5 | 0,1 | 30 | 9,8 | 0,5 | 7,0 | 30 | 2 | 30 | 27,8 | 21,6 | 6,0 | 50 | n.b. |
| 3 | 70 | 5 | 0,1 | 30 | 9,8 | 0,5 | 7,0 | 30 | 3 | 30 | 21,0 | 19,0 | 3,0 | 50 | n.b. |
| 4 | 70 | 5 | 0,1 | 30 | 9,8 | 0,5 | 7,0 | 30 | 4 | 30 | 28,0 | 20,9 | 6,1 | 50 | n.b. |
| 5 | 70 | 5 | 0,1 | 30 | 9,8 | 0,5 | 7,0 | 30 | 5 | 30 | 27,8 | 22,1 | 6,2 | 50 | n.b. |
| 6 | 70 | 5 | 0,1 | 30 | 9,8 | 0,5 | 7,0 | 30 | 6 | 30 | 23,6 | 22,6 | 4,6 | 50 | 78 |
| 7 | 70 | 5 | 0,1 | 30 | 9,8 | 0,5 | 7,0 | 30 | 7 | 30 | 26,0 | 27,6 | 7,1 | 100 | 93 |
| 8 | 70 | 5 | 0,1 | 30 | 9,8 | 0,5 | 7,0 | 30 | 8 | 30 | 25,1 | 23,7 | 4,5 | 30 | 83 |
| 9 | 70 | 5 | 0,1 | 30 | 9,8 | 0,5 | 7,0 | 30 | 9 | 30 | 21,9 | 13,9 | 2,1 | 10 | n.b. |
| 10 | 70 | 5 | 0,1 | 30 | 9,8 | 0,5 | 7,0 | 30 | 10 | 30 | 22,7 | 24,7 | 2,8 | 10 | n.b. |
| 11 | 70 | 5 | 0,1 | 30 | 9,8 | 0,5 | 7,0 | 30 | 11 | 30 | 28,2 | 21,6 | 7,6 | 100 | n.b. |
| 12 | 70 | 5 | 0,1 | 30 | 9,8 | 0,5 | 7,0 | 30 | 12 | 30 | 29,1 | 23,6 | 8,0 | 90 | n.b. |
| 13 | 35 | 2,5 | - | 15 | 4,9 | 0,25 | 3,5 | 15 | 13 | 15 | 31,3 | 26,2 | 6,4 | n.b. | n.b. |

*) n.b. = nicht bestimmt

## Patentansprüche

**1.** Zusammensetzungen enthaltend

A) ein flüssiges Copolymeres auf Basis von Butadien, einem polaren, ethylenisch ungesättigten Comonomeren und gegebenenfalls einem weiteren ethylenisch ungesättigten Comonomeren, wobei besagtes Copolymeres gegebenenfalls gegenüber Epoxidharzen reaktive Endgruppen enthält oder über besagte Endgruppen an ein Epoxidharz addiert ist, und
B) eine Verbindung der Formel I

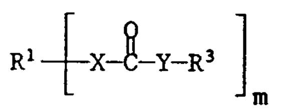 (I),

worin m 2 bis 6 ist, $R^1$ der m-wertige Rest eines in Epoxidharzen löslichen oder dispergierbaren, elastomeren Präpolymeren nach dem Entfernen der endständigen Isocyanat-, Amino- oder Hydroxylgruppen ist, X -O- oder $-NR^2-$ ist, wobei $R^2$ Wasserstoff, $C_1$-$C_6$Alkyl oder Phenyl bedeutet, Y -O-ist, $R^3$ der Rest eines Monophenols nach dem Entfernen einer Hydroxylgruppe ist oder Y und $R^3$ zusammen den Rest eines aliphatischen Lactams bilden, der über das N-Atom mit der Carbonylgruppe verknüpft ist, mit der Massgabe, dass mindestens eine der Gruppen -X- oder $-Y-R^3$ ein Stickstoffatom enthält.

2. Zusammensetzungen gemäss Anspruch 1, worin Komponente A) ein flüssiges Butadien-Acrylnitril-Copolymeres ist.

3. Zusammensetzungen gemäss Anspruch 1, worin Komponente A) als Addukt eines Butadien-Acrylnitril-Copolymeren mit gegenüber Epoxidharzen reaktiven funktionellen Gruppen an ein Epoxidharz eingesetzt wird.

4. Zusammensetzungen gemäss Anspruch 1, worin $-Y-R^3$ ein Rest der Formel V oder VI ist

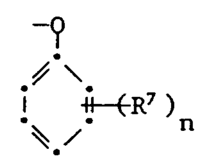 (V), 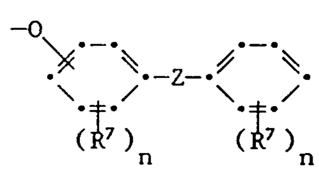 (VI),

worin $R^7$ $C_1$-$C_{20}$Alkyl, $C_1$-$C_{20}$Alkoxy, $C_2$-$C_{20}$Alkenyl, $C_2$-$C_6$-Alkinyl $-CO-OR^8$ oder Halogen darstellt, n 0, 1 oder 2 bedeutet, Z eine direkte C-C-Bindung ist oder ein Brückenglied ausgewählt aus der Gruppe bestehend aus $-CR^9R^{10}-$, -O-, -S-, $-SO_2-$, -CO-, -COO-, $-CONR^{11}$ - und $-SiR^{12}R^{13}-$ ist, $R^9$, $R^{10}$ und $R^{11}$ unabhängig voneinander Wasserstoff, $-CF_3$ oder $C_1$-$C_6$Alkyl sind oder $R^9$ und $R^{10}$ zusammen mit dem gemeinsamen C-Atom einen cycloaliphatischen Rest mit 5-12 C-Atomen bilden, $R^8$ $C_1$-$C_{20}$Alkyl ist und $R^{12}$ und $R^{13}$ $C_1$-$C_6$Alkyl bedeuten; oder worin $-Y-R^3$ ein Rest der Formel VII ist

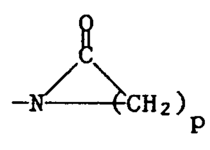 (VII),

worin p 3 bis 5 bedeutet.

5. Zusammensetzungen gemäss Anspruch 1, worin X -NH- ist und Y -O-bedeutet.

6. Zusammensetzungen gemäss Anspruch 1, worin Komponente B) eine Verbindung der Formel I ist, die erhältlich ist durch Umsetzung von
a) einem präpolymeren Polyisocyanat, welches

a1) ein Addukt eines Polyisocyanats an eine präpolymere Polyhydroxyl- oder Polysulfhydrylverbindung oder an ein Gemisch solcher Verbindungen gegebenenfalls in Kombination mit einem Kettenverlängerer ist, oder

a2) sich ableitet von einem präpolymeren Polyetheramin, mit

b) mindestens einem Monophenol.

**7.** Zusammensetzungen gemäss Anspruch 6, worin zur Herstellung von Komponente a1) ein hydroxylterminierter Polyether verwendet wird.

**8.** Zusammensetzungen gemäss Anspruch 6, worin zur Herstellung von Komponente a1) ein Gemisch aus einem hydroxylterminierten Polybutadien und einem hydroxyl-terminierten Polyalkylenglykol ist oder ein hydroxyl-terminiertes Polyalkylenglykol mit aufgepfropften 1-Olefinen verwendet wird.

**9.** Zusammensetzungen gemäss Anspruch 6, worin Komponente b) ein Gemisch eines Monophenols mit einer kleinen Menge eines Bisphenols ist.

**10.** Zusammensetzungen gemäss Anspruch 1 enthaltend als Komponente B) Verbindungen der Formel IX

$$[\{R^{15}-O-\overset{O}{\overset{\|}{C}}-NH\}_r R^{16}-NH-\overset{O}{\overset{\|}{C}}-O]_m R^{17} \qquad (IX),$$

worin $R^{15}$ der Rest eines Monophenols nach dem Entfernen der phenolischen Hydroxylgruppe ist, r eine ganze Zahl zwischen 1 und 3 ist, $R^{16}$ der r+1-wertige Rest eines aliphatischen, cycloaliphatischen, aromatischen oder araliphatischen Polyisocyanates nach dem Entfernen der Isocyanatgruppen ist, $R^{17}$ ein m-wertiger hydroxyl-terminierter Polyester- oder Polyetherrest nach dem Entfernen der endständigen OH-Gruppen ist, mit der Massgabe, dass die Reste $R^{15}$ und $R^{16}$ innerhalb eines gegebenen Moleküls unterschiedlich sein können.

**11.** Zusammensetzungen gemäss Anpruch 10, worin m 2 oder 3 bedeutet, r 1 ist, $-O-R^{15}$ ein Rest der Formel V gemäss Anspruch 4 ist, $R^{16}$ sich ableitet von einem aliphatischen oder cycloaliphatischen Diisocyanat und $R^{17}$ ein zwei- oder dreiwertiger Rest eines Polyalkylenetherpolyols mit einem Molekulargewicht von 150 bis 3000 nach dem Entfernen der endständigen Hydroxylgruppen ist.

**12.** Zusammensetzungen gemäss Anspruch 6, worin Komponente B) erhältlich ist durch Umsetzung von

a1) einem Addukt einer im wesentlichen äquivalenten Menge eines Diisocyanates mit einem Gemisch aus einem di- oder tri-hydroxyl-terminierten Polyether oder Polyester und weniger als 1 Mol-%, bezogen auf das hydroxyl-terminierte Präpolymere, eines kurzkettigen Diols oder Triols und

b) einer dem NCO-Gehalt im wesentlichen äquivalenten Menge eines Monophenols.

**13.** Zusammensetzungen gemäss Anspruch 1 enthaltend als Komponente B) eine Verbindung der Formel XI

$$\left[ R^{15}-O-(\overset{O}{\overset{\|}{C}}-NH-R^{18})_t \overset{O}{\overset{\|}{C}}-NH \right]_m R^{19} \qquad (XI),$$

worin $R^{15}$ und m die in Anspruch 10 definierte Bedeutung besitzen, t 0 oder 1 ist, $R^{18}$ der zweiwertige Rest eines aliphatischen, cycloaliphatischen, aromatischen oder araliphatischen Diisocyanats nach dem Entfernen der Isocyanatgruppen ist und $R^{19}$ der m-wertige Rest eines aminoterminierten Polyalkylenethers nach dem Entfernen der endständigen $NH_2$-Gruppen ist.

**14.** Zusammensetzungen enthaltend Komponenten A) und B) gemäss Anspruch 1, und C) ein Epoxidharz mit wenigstens zwei 1,2-Epoxidgruppen pro Molekül; oder enthaltend ein Addukt aus Komponente A) und einem Epoxidharz, sowie Komponente B) und gegebenenfalls Komponente C);

**15.** Zusammensetzungen gemäss Anspruch 14, worin Komponente C) ein Polyglycidylether eines Bisphenols, eines Novolaks oder eines aliphatischen Diols ist oder ein Addukt von Bisphenol A und glycidylisierten aliphatischen Diolen.

**16.** Die durch Härtung von Zusammensetzungen gemäss Anspruch 14 erhältlichen gehärteten Produkte.

**17.** Verwendung der Zusammensetzungen gemäss Anspruch 14 als Klebstoffe, Klebefilme, Patches, Matrixharze, Lacke oder Dichtungsmassen.

## Claims

**1.** A composition comprising

A) a liquid copolymer based on butadiene, a polar, ethylenically unsaturated comonomer and, if desired, a further ethylenically unsaturated comonomer, the said copolymer containing, if desired, terminal groups reactive toward epoxy resins, or forming an adduct with an epoxy resin via the said terminal groups, and

B) a compound of the formula I

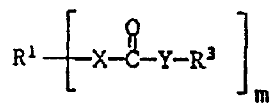 (I),

in which m is 2 to 6, $R^1$ is the m-valent radical, after removal of the terminal isocyanate, amino or hydroxyl groups, of an elastomeric prepolymer soluble or dispersible in epoxy resins, X is -O- or $-NR^2-$, where $R^2$ is hydrogen, $C_1$-$C_6$alkyl or phenyl, Y is -O-, $R^3$ is the radical of a monophenol after removal of a hydroxyl group, or Y and $R^3$ form jointly the radical of an aliphatic lactam which is attached to the carbonyl group via the N atom, with the proviso that at least one of the groups -X- or $-Y-R^3$ contains a nitrogen atom.

**2.** A composition according to claim 1, in which the component A) is a liquid butadiene-acrylonitrile copolymer.

**3.** A composition according to claim 1, in which the component A) is used as adduct of a butadiene-acrylonitrile copolymer having functional groups reactive toward epoxy resins with an epoxy resin.

**4.** A composition according to claim 1, in which $-Y-R^3$ is a radical of the formula V or VI

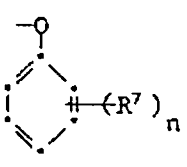 (V), 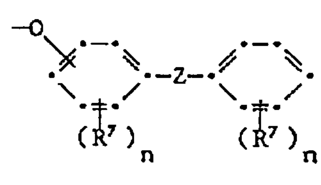 (VI),

in which $R^7$ is $C_1$-$C_{20}$alkyl, $C_1$-$C_{20}$alkoxy, $C_2$-$C_{20}$alkenyl, $C_2$-$C_6$alkynyl, $-CO-OR^8$ or halogen, n is 0, 1 or 2, Z is a direct C-C bond or a bridge member selected from the group consisting of $-CR^9R^{10}-$, -O-, -S-, $-SO_2-$, -CO-, -COO-, $-CONR^{11}-$ and $-SiR^{12}R^{13}-$, $R^9$, $R^{10}$ and $R^{11}$ independently of one another are hydrogen, $-CF_3$ or $C_1$-$C_6$alkyl, or $R^9$ and $R^{10}$ form jointly with the carbon atom they have in common a cycloaliphatic radical having 5 to 12 carbon atoms, $R^8$ is $C_1$-$C_{20}$alkyl and $R^{12}$ and $R^{13}$ are $C_1$-$C_6$alkyl; or in which $-Y-R^3$ is a radical of the formula VII

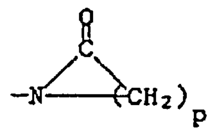 (VII),

in which P is 3 to 5.

**5.** A composition according to claim 1, in which X is -NH- and Y is -O-.

**6.** A composition according to claim 1, in which the component B) is a compound of the formula I which can be obtained by reacting
   a) a prepolymeric polyisocyanate which
      a1) is an adduct of a polyisocyanate with a prepolymeric polyhydroxyl or polysulfhydryl compound or with a mixture of such compounds, if desired in combination with a chain lengthener, or
      a2) is derived from a prepolymeric polyether amine, with
   b) at least one monophenol.

**7.** A composition according to claim 6, in which for the preparation of the component a1) a hydroxyl-terminated polyether is used.

**8.** A composition according to claim 6, in which for the preparation of the component a1) a mixture of a hydroxyl-terminated polybutadiene and a hydroxyl-terminated polyalkylene glycol or a hydroxyl-terminated polyalkylene glycol with grafted 1-olefins is used.

**9.** A composition according to claim 6, in which the component b) is a mixture of a monophenol with a small amount of a bisphenol.

**10.** A composition according to claim 1, containing as the component B) compounds of the formula IX

$$[\{R^{15}-O-\overset{O}{\overset{\|}{C}}-NH\}_{r}R^{16}-NH-\overset{O}{\overset{\|}{C}}-O\}_{m}R^{17} \qquad (IX),$$

in which $R^{15}$ is the radical of a monophenol after removal of the phenolic hydroxyl group, r is an integer between 1 and 3, $R^{16}$ is the r+1-valent radical of an aliphatic, cycloaliphatic, aromatic or araliphatic polyisocyanate after removal of the isocyanate groups, $R^{17}$ is an m-valent hydroxyl-terminated polyester or polyether radical after removal of the terminal OH groups, with the proviso that the radicals $R^{15}$ and $R^{16}$ may be different within a given molecule.

**11.** A composition according to claim 10, in which m is 2 or 3, r is 1, -O-$R^{15}$ is a radical of the formula V according to claim 4, $R^{16}$ is derived from an aliphatic or cycloaliphatic diisocyanate and $R^{17}$ is a divalent or trivalent radical of a polyalkylene ether polyol having a molecular weight of 150 to 3000 after removal of the terminal hydroxyl groups.

**12.** A composition according to claim 6, in which the component B) can be obtained by reacting
   a1) an adduct of an essentially equivalent amount of a diisocyanate with a mixture of a dihydroxyl- or trihydroxyl-terminated polyether or polyester and less than 1 mol %, based on the hydroxyl-terminated prepolymer, of a short-chain diol or triol, and
   b) an amount of a monophenol essentially equivalent to the NCO content.

**13.** A composition according to claim 1 containing as the component B) a compound of the formula XI

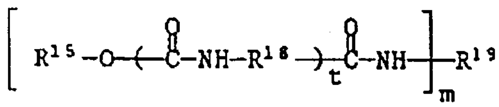

(XI),

in which $R^{15}$ and m are as defined in claim 10, t is 0 or 1, $R^{18}$ is the divalent radical of an aliphatic, cycloaliphatic, aromatic or araliphatic diisocyanate after removal of the isocyanate groups and $R^{19}$ is the m-valent radical of an amino-terminated polyalkylene ether after removal of the terminal $NH_2$ groups.

**14.** A composition comprising the components A) and B) according to claim 1, and C), an epoxy resin having at least two 1,2-epoxide groups per molecule; or comprising an adduct of the component A) and an epoxy resin, as well as the component B) and, if desired, the component C).

**15.** A composition according to claim 14, in which the component C) is a polyglycidyl ether of a bisphenol, a novolak or an aliphatic diol or is an adduct of bisphenol A and glycidylized aliphatic diols.

**16.** A cured product obtainable by curing of a composition according to claim 14.

**17.** Use of a composition according to claim 14 as an adhesive, adhesive film, patch, matrix resin, paint or sealant.

**Revendications**

**1.** Compositions contenant

A) un copolymère liquide à base de butadiène, d'un comonomère polaire à insaturation éthylénique et éventuellement d'un autre comonomère à insaturation éthylénique, où ledit copolymère éventuellement contient des groupes terminaux réactifs vis-à-vis des résines époxy ou forme par l'intermédiaire desdits groupes terminaux un produit d'addition avec une résine époxy, et

B) un composé de formule I

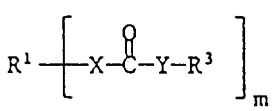

(I),

dans laquelle m est 2 à 6, $R^1$ représente le reste de valence m d'un prépolymère élastomère, soluble ou pouvant se disperser dans les résines époxy, après la séparation des groupes terminaux isocyanate, amino ou hydroxy, X est -O- ou $-NR^2-$, où $R^2$ représente l'hydrogène, un alkyle en $C_1$-$C_6$ ou un phényle, Y est -O-, $R^3$ est le reste d'un monophénol après la séparation d'un groupe hydroxy, ou bien Y et $R^3$ forment ensemble le reste d'un lactame aliphatique qui est relié au groupe carbonyle par l'intermédiaire de l'atome d'azote, sous réserve qu'au moins l'un des groupes -X- ou $-Y-R^3$ contienne un atome d'azote.

**2.** Compositions selon la revendication 1, dans lesquelles le constituant A) est un copolymère butadiène-acrylonitrile liquide.

**3.** Compositions selon la revendication 1, dans lesquelles le constituant A) est utilisé sous forme d'un produit d'addition sur une résine époxy d'un copolymère butadiène-acrylonitrile ayant des groupes fonctionnels réactifs vis-à-vis des résines époxy.

**4.** Compositions selon la revendication 1, dans lesquelles -Y-$R^3$ est un reste de formule V ou VI

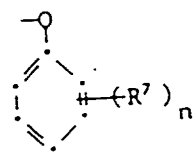 (V), 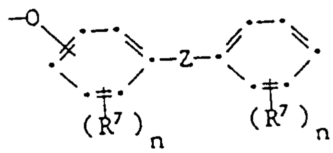 (VI),

dans lesquelles $R^7$ représente un alkyle en $C_1$-$C_{20}$, un alcoxy en $C_1$-$C_{20}$, un alcényle en $C_2$-$C_{20}$, un alcynyle en $C_2$-$C_6$, -CO-$OR^8$ ou un halogène, n signifie 0, 1 ou 2, Z est une liaison directe C-C ou un pont choisi dans le groupe constitué par -$CR^9R^{10}$-, -O-, -S-, -$SO_2$-, -CO-, -COO-, -$CONR^{11}$- et -$SiR^{12}R^{13}$-, $R^9$, $R^{10}$ et $R^{11}$ représentent indépendamment les uns des autres l'hydrogène, -$CF_3$ ou alkyle en $C_1$-$C_6$, ou $R^9$ et $R^{10}$ représentent ensemble avec l'atome de carbone commun un reste cycloaliphatique de 5 à 12 atomes de carbone, $R^8$ est un alkyle en $C_1$-$C_{20}$ et $R^{12}$ et $R^{13}$ représentent un alkyle en $C_1$-$C_6$; ou dans lesquelles -Y-$R^3$ est un reste de formule VII

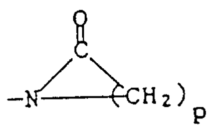 (VII),

dans laquelle p signifie 3 à 5.

**5.** Compositions selon la revendication 1, dans lesquelles X est -NH- et Y est -O-.

**6.** Compositions selon la revendication 1, dans lesquelles le constituant B) est un composé de formule I qui peut être obtenu par réaction de
- a) un polyisocyanate prépolymère qui
  - a1) est un produit d'addition d'un polyisocyanate sur un composé polyhydroxylé ou polysulfhydrylé prépolymère ou sur un mélange de tels composés éventuellement en combinaison avec un agent d'allongement de chaîne, ou
  - a2) dérive d'une polyétheramine prépolymère, avec
- b) au moins un monophénol.

**7.** Compositions selon la revendication 6, dans lesquelles on utilise pour la préparation du constituant a1) un polyéther à terminaison hydroxyle.

**8.** Compositions selon la revendication 6, dans lesquelles on utilise pour la préparation du constituant a1) un mélange d'un polybutadiène à terminaison hydroxyle et d'un polyalkylèneglycol à terminaison hydroxyle ou un polyalkylèneglycol à terminaison hydroxyle avec des 1-oléfines greffées.

**9.** Compositions selon la revendication 6, dans lesquelles le constituant b) est un mélange d'un monophénol avec une petite quantité d'un bisphénol.

**10.** Compositions selon la revendication 1, contenant comme constituant B) des composés de formule IX

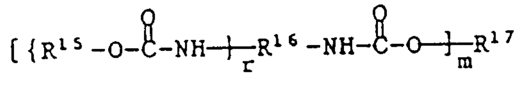 (IX),

dans laquelle $R^{15}$ est le reste d'un monophénol après la séparation du groupe hydroxyle phénolique, r est un nombre entier compris entre 1 et 3, $R^{16}$ est le reste de valence r+1 d'un polyisocyanate aliphatique, cycloaliphatique, aromatique ou araliphatique après la séparation des groupes isocyanates, $R^{17}$ est un reste de polyester ou de polyéther à terminaison hydroxyle de valence m après la séparation des groupes OH terminaux, sous réserve que les restes $R^{15}$ et $R^{16}$ puissent être différents à

l'intérieur d'une molécule donnée.

**11.** Compositions selon la revendication 10, dans lesquelles m signifie 2 ou 3, r est 1, -O-$R^{15}$ est un reste de formule V selon la revendication 4, $R^{16}$ dérive d'un diisocyanate aliphatique ou cycloaliphatique et $R^{17}$ est un reste di- ou trivalent d'un polyalkylène-étherpolyol ayant une masse moléculaire de 150 à 3000 après la séparation des groupes hydroxyle terminaux.

**12.** Compositions selon la revendication 6, dans lesquelles le constituant B) peut être obtenu par réaction de

a1) un produit d'addition d'une quantité essentiellement équivalente d'un diisocyanate avec un mélange d'un polyéther ou polyester à terminaison di- ou trihydroxyle et de moins de 1 % en moles par rapport au prépolymère à terminaison hydroxyle d'un diol ou triol à chaîne courte avec

b) une quantité essentiellement équivalente à la teneur en NCO d'un monophénol.

**13.** Compositions selon la revendication 1, contenant comme constituant B) un composé de formule XI

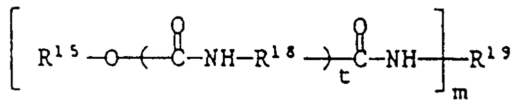 (XI),

dans laquelle $R^{15}$ et m ont la signification définie dans la revendication 10, t est 0 ou 1, $R^{18}$ est le reste divalent d'un diisocyanate aliphatique, cycloaliphatique, aromatique ou araliphatique après la séparation des groupes isocyanate et $R^{19}$ est le reste de valence m d'un polyalkylène-éther à terminaison amino après la séparation des groupes $NH_2$ terminaux.

**14.** Compositions contenant les constituants A) et B) selon la revendication 1, et C) une résine époxy ayant au moins deux groupes 1,2-époxy par molécule; ou contenant un produit d'addition du constituant A) et d'une résine époxy, ainsi que le constituant B) et éventuellement le constituant C).

**15.** Compositions selon la revendication 14, dans lesquelles le constituant C) est un éther polyglycidylique d'un bisphénol, d'une novolaque ou d'un diol aliphatique ou un produit d'addition de bisphénol A et de diols aliphatiques transformés en glycidyle.

**16.** Produits durcis pouvant être obtenus par durcissement de compositions selon la revendication 14.

**17.** Utilisation des compositions selon la revendication 14 comme adhésifs, films adhésifs, pastilles, résines matrices, vernis ou produits d'étanchéité.